(19) Europäisches Patentamt
European Patent Office
Office européen des brevets

(11) EP 4 810 658 A1

(12) EUROPEAN PATENT APPLICATION

(43) Date of publication:
**23.09.2026 Bulletin 2026/39**

(21) Application number: **26157147.5**

(22) Date of filing: **09.02.2026**

(51) International Patent Classification (IPC):
***C25B 1/04*** *(2021.01)* ***C25B 15/02*** *(2021.01)*
***C25B 15/025*** *(2021.01)*

(52) Cooperative Patent Classification (CPC):
**C25B 1/04; C25B 15/02; C25B 15/025**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **18.03.2025 JP 2025043176**

(71) Applicant: **KABUSHIKI KAISHA TOSHIBA**
**Kawasaki-shi, Kanagawa (JP)**

(72) Inventors:
- **KUDO, Yuki**
  **Kawasaki-shi, Kanagawa (JP)**
- **FUJIWARA, Naoya**
  **Kawasaki-shi, Kanagawa (JP)**
- **YAMAGIWA, Masakazu**
  **Kawasaki-shi, Kanagawa (JP)**
- **KITAGAWA, Ryota**
  **Kawasaki-shi, Kanagawa (JP)**

(74) Representative: **Hoffmann Eitle**
**Patent- und Rechtsanwälte PartmbB**
**Arabellastraße 30**
**81925 München (DE)**

# (54) ELECTROLYSIS DEVICE AND STATE DIAGNOSIS METHOD

(57) An electrolysis device includes: an electrolysis cell having a reduction electrode, an oxidation electrode, a first chamber facing on the reduction electrode, a second chamber facing on the oxidation electrode and configured to be supplied with an electrolytic solution containing water or water vapor, and a diaphragm provided between the first chamber and the second chamber; an operation parameter input unit configured to input an operation parameter for operating the electrolysis cell; an operation control unit configured to generate at least one control signal for operating the electrolysis cell according to the operation parameter; a control signal monitor unit configured to monitor the at least one control signal from the operation control unit; and a data processing unit configured to diagnose a state of the electrolysis cell by performing data processing using control signal data indicating a monitoring result of the at least one control signal.



Processed by Luminess, 75001 PARIS (FR)

## Description

### FIELD

Arrangements relate to an electrolysis device and a state diagnosis method.

### BACKGROUND

In recent years, depletion of fossil fuel such as petroleum or coal has been concerned, and expectation for sustainably-usable renewable energy has been rising. As the renewable energy, solar power generation, hydroelectric power generation, wind power generation, geothermal power generation, and the like can be cited. These are power sources whose outputs vary (variable power sources) and have a problem of hampering stable supply of electric power due to dependence of a power generation amount on weather, a natural situation, and the like. Thus, an attempt is being made to adjust electric power by combining a variable power source and a storage battery.

Moreover, as decarbonization attempts, attention is paid to a water electrolysis technology in which water ($H_2O$) is electrolyzed to produce hydrogen ($H_2$), and a carbon dioxide electrolysis technology in which carbon dioxide ($CO_2$) is electrochemically reduced to be converted to a chemical substance (chemical energy) such as a carbon compound such as carbon monoxide (CO), formic acid (HCOOH), methanol ($CH_3OH$), methane ($CH_4$), acetic acid ($CH_3COOH$), ethanol ($C_2H_5OH$), ethane ($C_2H_6$), or ethylene ($C_2H_4$). Connecting a variable power source using renewable energy to such an electrolysis device has an advantage that power adjustment and hydrogen production, and carbon dioxide recycling can be performed at the same time.

As a carbon dioxide electrolysis device, for example, a structure in which a cathode solution and a $CO_2$ gas are brought into contact with a cathode and an anode solution is brought into contact with an anode is being studied. Such a structure is called a carbon dioxide electrolysis cell here. When using such an electrolysis cell, a reaction of producing, for example, CO from $CO_2$ is performed for a long time by, for example, passing a constant current through the cathode and the anode, there arise problems of causing time-dependent deterioration in cell output such as, for example, a decrease in production amount of CO and an increase in cell voltage. As one of deterioration positions, in a gas flow path, salt originating in an electrolyte of the solution precipitates, thereby causing a phenomenon in which a flow of the gas or the like is inhibited, against which the introduction of a refresh operation to dissolve the salt is being studied.

### BRIEF DESCRIPTION OF THE DRAWINGS

FIG. 1 is a block diagram illustrating an example configuration of an electrolysis device of an arrangement.
FIG. 2 is a view illustrating an example configuration of an electrolysis cell.
FIG. 3 is a flowchart for explaining a state diagnosis method using the electrolysis device.
FIG. 4 is a view illustrating an example configuration of an electrolysis device of a second arrangement.
FIG. 5 is a diagram illustrating an example configuration of an electrolysis device of a third arrangement.
FIG. 6 is a diagram illustrating an example configuration of an electrolysis device of a fourth arrangement.
FIG. 7 is a diagram illustrating an example configuration of an electrolysis device of a fifth arrangement.
FIG. 8 is a diagram illustrating an example configuration of an electrolysis device of a sixth arrangement.
FIG. 9 is a diagram illustrating an example configuration of an electrolysis device of a seventh arrangement.
FIG. 10 is a diagram illustrating an example configuration of an electrolysis device of an eighth arrangement.
FIG. 11 is a diagram illustrating an example configuration of an electrolysis device of a ninth arrangement.
FIG. 12 is a diagram illustrating an example configuration of an electrolysis device of a tenth arrangement.
FIG. 13 is a diagram illustrating an example configuration of an electrolysis device of an eleventh arrangement.
FIG. 14 is a flowchart for explaining a state diagnosis method using the electrolysis device
FIG. 15 is a diagram illustrating an example configuration of an electrolysis device of a thirteenth arrangement.

### DETAILED DESCRIPTION

An electrolysis device of an arrangement includes: an electrolysis cell having a reduction electrode, an oxidation electrode, a first chamber facing on the reduction electrode, a second chamber facing on the oxidation electrode and configured to be supplied with an electrolytic solution containing water or water vapor, and a diaphragm provided between the first chamber and the second chamber; an operation parameter input unit configured to input an operation parameter for operating the electrolysis cell; an operation control unit configured to generate at least one control signal for operating the electrolysis cell according to the operation parameter; a control signal monitor unit configured to monitor the at least

one control signal from the operation control unit; and a data processing unit configured to diagnose a state of the electrolysis cell by performing data processing using control signal data indicating a monitoring result of the at least one control signal.

Electrolysis devices and electrolysis methods of arrangements will be hereinafter described with reference to the drawings. In the arrangements presented below, substantially the same constituent parts are denoted by the same reference signs and a description thereof may be partly omitted. The drawings are schematic, and the relation of thickness and planar dimension, a thickness ratio among parts, and so on may be different from actual ones.

(First arrangement)

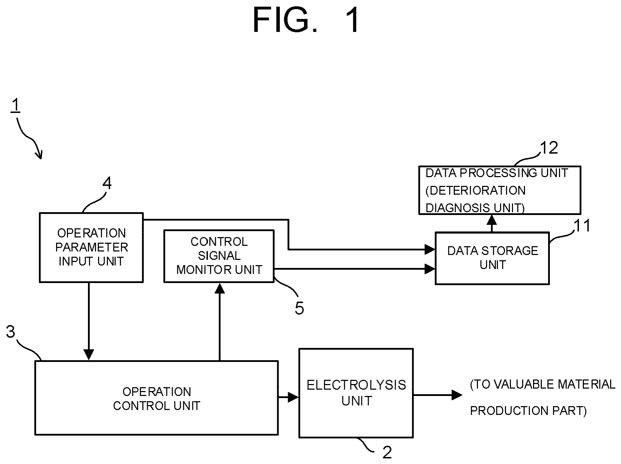

FIG. 1 is a block diagram illustrating an example configuration of an electrolysis device of an arrangement. FIG. 1 schematically illustrates an example configuration of an electrolysis device 1.

The electrolysis device 1 includes an electrolysis unit 2, an operation control unit 3 for controlling operation of the electrolysis unit 2, an operation parameter input unit 4 configured to input an operation parameter to the operation control unit 3, a control signal monitor unit 5 configured to monitor a control signal from the operation control unit 3, a data storage unit 11 configured to store data from the operation parameter input unit 4 and the control signal monitor unit 5, and a data processing unit 12 which performs data processing using data from the data storage unit 11. The units will be described in detail below.

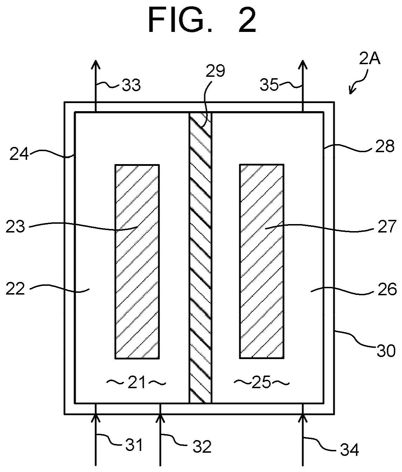

The electrolysis unit 2 has an electrolysis cell. FIG. 2 is a view illustrating an example configuration of the electrolysis cell. FIG. 2 illustrates an electrolysis cell 2A. The electrolysis cell 2A includes a cathode part (reduction electrode chamber) 24 having a first chamber 22 to which a first electrolytic solution 21 containing $CO_2$ is supplied and a reduction electrode (cathode) 23 disposed in the first chamber 22, an anode part (oxidation electrode chamber) 28 having a second chamber 26 for accommodating a second electrolytic solution 25 containing water and an oxidation electrode (anode) 27 disposed in the second chamber 26, and a diaphragm 29 which is disposed between the first chamber 22 and the second chamber 26 and divide the first chamber 22 and the second chamber 26. The first chamber 22 can constitute a first accommodation part (a first accommodation tank). The second chamber 26 can constitute a second accommodation part (a second accommodation tank). The first chamber 22, the second chamber 26, and the diaphragm 29 can constitute a reaction tank 30.

The reaction tank 30 is separated into two chambers of the first chamber 22 and the second chamber 26 by the diaphragm 29 capable of moving ions such as hydrogen ions ($H^+$), hydroxide ions ($OH^-$) hydrogen carbonate ions ($HCO_3^-$), and carbonate ions ($CO_3^{2-}$). The reaction tank 30 may be formed of, for example, a white quartz glass plate, an acrylic resin (PMMA), polystyrene (PS), or the like. A light-transmitting material may be used for a part of the reaction tank 30, and a resin material may be used for the remainder thereof. As examples of the resin materials, there can be cited polyether ether ketone (PEEK), polyamide (PA), polyvinylidene fluoride (PVDF), polyacetal (POM) (copolymer), polyphenylene ether (PPE), an acrylonitrile-butadiene-styrene copolymer (ABS), polypropylene (PP), polyethylene (PE), and so on.

In the first chamber 22, the reduction electrode 23 is disposed and $CO_2$ is further accommodated. $CO_2$ is accommodated as, for example, the first electrolytic solution 21 containing it in the first chamber 22. The first electrolytic solution 21 functions as a reduction electrode solution (cathode solution) and contains carbon dioxide ($CO_2$) as the substance to be reduced. Here, $CO_2$ present in the first electrolytic solution 21 need not be gaseous and may be in a dissolved form or may be in the form of carbonate ions ($CO_3^{2-}$), hydrogen carbonate ions ($HCO_3^-$), or the like. The first electrolytic solution 21 may contain hydrogen ions, and it is preferably an aqueous solution. In the second chamber 26, the oxidation electrode 27 is disposed and the second electrolytic solution 25 containing water is further accommodated. The second electrolytic solution 25 functions as an oxidation electrode solution (anode solution) and contains, for example, water ($H_2O$), chloride ions ($Cl^-$), carbonate ions ($CO_3^{2-}$), hydrogen carbonate ions ($HCO_3^-$), or the like as the substance to be oxidized. The second electrolytic solution 25 may be an alcohol aqueous solution or an aqueous solution of an organic substance such as amine.

Varying the amounts of water contained in the first and second electrolytic solutions 21, 25 or changing the electrolytic solution components can change reactivity to change the selectivity of the substance to be reduced or a ratio of produced chemical substances. The first and second electrolytic solutions 21, 25 may contain a redox couple as required. As the redox couple, for example, $Fe^{3+}/Fe^{2+}$ and $IO^{3-}/I^-$ can be cited. To the first chamber 22, a first gas supply flow path 31 which supplies a source gas containing $CO_2$ and a first liquid supply flow path 32 which supplies the first electrolytic solution 21 are connected, and moreover a first gas and solution discharge flow path 33 which discharges a reaction gas and the first electrolytic solution 21 is connected. To the second chamber 26, a second liquid supply flow path 34 which supplies the second electrolytic solution 25 is connected, and moreover a second gas and solution discharge flow path 35 is connected. The first and second accommodation parts 22, 26 may each have a space part which accommodates gases contained in a reactant and a product.

The pressures in the first chamber 22 and the second chamber 26 are preferably set to pressures at which $CO_2$ does not liquefy, and preferably regulated to, specifically, a range of not lower than 0.1 MPa nor higher than 6.4 MPa. If the

pressures in the first chamber 22 and the second chamber 26 are lower than 0.1 MPa, the efficiency of the $CO_2$ reduction reaction may decrease. If the pressures in the first chamber 22 and the second chamber 26 exceed 6.4 MPa, $CO_2$ liquefies, and the efficiency of the $CO_2$ reduction reaction may decrease. A differential pressure between the first chamber 22 and the second chamber 26 may cause the breakage or the like of the diaphragm 29. Therefore, the difference between the pressures of the first chamber 22 and the second chamber 26 (differential pressure) is preferably set to 1 MPa or lower.

The lower the temperatures of the first electrolytic solution 21 and the second electrolytic solution 25 are, the larger the dissolution amount of $CO_2$ is, but solution resistance increases and a theoretical voltage of the reaction increases at low temperatures, which is disadvantageous from a viewpoint of the carbon dioxide electrolysis. On the other hand, high temperatures of the first electrolytic solution 21 and the second electrolytic solution 25 cause a small dissolution amount of $CO_2$ but are advantageous as the carbon dioxide electrolysis. Therefore, the operating temperature condition of the electrolysis cell 2A is preferably in a mid-temperature range, for example, in a range of not lower than the atmospheric temperature nor higher than the boiling points of the first electrolytic solution 21 and the second electrolytic solution 25. When the first electrolytic solution 21 and the second electrolytic solution 25 are aqueous solutions, a temperature of not lower than 10°C nor higher than 100°C is preferable and a temperature of not lower than 25°C nor higher than 80°C is more preferable. The case of filling the first chamber 22 with the source gas containing $CO_2$ and filling the second chamber 26 with water vapor allows operation at higher temperatures. In this case, an operating temperature is decided in consideration of heat resistance of members such as the diaphragm 29. When the diaphragm 29 is an ion exchange membrane or the like, the maximum operating temperature is 180°C, and when the diaphragm 29 is a polymeric porous membrane such as Teflon, the maximum temperature is 300°C.

The first electrolytic solution 21 and the second electrolytic solution 25 may be electrolytic solutions containing different substances or may be the same electrolytic solutions containing the same substance. When the first electrolytic solution 21 and the second electrolytic solution 25 contain the same substance and the same solvent, the first electrolytic solution 21 and the second electrolytic solution 25 may be regarded as one electrolytic solution. Further, pH of the second electrolytic solution 25 may be higher than pH of the first electrolytic solution 21. This facilitates the movement of ions such as hydrogen ions or hydroxide ions through the diaphragm 29. Further, a liquid junction potential caused by the pH difference allows an oxidation-reduction reaction to effectively progress.

The first electrolytic solution 21 is preferably a solution high in $CO_2$ absorptance. A presence form of $CO_2$ in the first electrolytic solution 21 is not necessarily limited to a dissolved state, and $CO_2$ in a bubble form may be mixed and present in the first electrolytic solution 21. As the electrolytic solution containing $CO_2$, for example, there can be cited aqueous solutions containing hydrogen carbonate or carbonate such as lithium hydrogen carbonate ($LiHCO_3$), sodium hydrogen carbonate ($NaHCO_3$), potassium hydrogen carbonate ($KHCO_3$), cesium hydrogen carbonate ($CsHCO_3$), sodium carbonate ($Na_2CO_3$), and potassium carbonate ($K_2CO_3$), phosphoric acid, boric acid, or the like. The electrolytic solution containing $CO_2$ may contain any of alcohols such as methanol, ethanol, and acetone or may be an alcohol solution. The first electrolytic solution 21 may be an electrolytic solution containing a $CO_2$ absorbent which lowers the reduction potential of $CO_2$, has high ion conductivity, and absorbs $CO_2$.

As the second electrolytic solution 25, a solution using water ($H_2O$), for example, an aqueous solution containing a desired electrolyte can be used. This solution is preferably an aqueous solution which promotes an oxidation reaction of water. As the aqueous solution containing the electrolyte, for example, there can be cited aqueous solutions containing phosphate ions ($PO_4^{3-}$), borate ions ($BO_3^{3-}$), sodium ions ($Na^+$), potassium ions ($K^+$), calcium ions ($Ca^{2+}$), lithium ions ($Li^+$), cesium ions ($Cs^+$), magnesium ions ($Mg^{2+}$), chloride ions ($Cl^-$), hydrogen carbonate ions ($HCO_3^-$), carbonate ions ($CO_3^{2-}$), hydroxide ions ($OH^-$), or the like.

As the above-described first electrolytic solution 21 and second electrolytic solution 25, for example, an ionic liquid which is composed of salt of cations such as imidazolium ions or pyridinium ions and anions such as $BF_4^-$ or $PF_6^-$ and which is in a liquid state in a wide temperature range, or an aqueous solution thereof is usable. Moreover, as other electrolytic solutions, solutions of amine such as ethanolamine, imidazole, or pyridine or aqueous solutions thereof can be cited. As the amine, primary amine, secondary amine, tertiary amine, and so on can be cited. These electrolytic solutions may be high in ion conductivity, have properties of absorbing carbon dioxide, and have characteristics of decreasing reduction energy.

As the primary amine, methylamine, ethylamine, propylamine, butylamine, pentylamine, hexylamine, and so on can be cited. A hydrocarbon of the amine may be replaced with alcohol, halogen, or the like. As the amine whose hydrocarbon is replaced, methanolamine, ethanolamine, chloromethylamine, and so on can be cited. Further, an unsaturated bond may be present therein. The same applies to hydrocarbons of the secondary amine and the tertiary amine.

As the secondary amine, there can be cited dimethylamine, diethylamine, dipropylamine, dibutylamine, dipentylamine, dihexylamine, dimethanolamine, diethanolamine, dipropanolamine, and so on. The replaced hydrocarbons may be different. This also applies to the tertiary amine. For example, as one whose hydrocarbons are different, methylethylamine, methylpropylamine, and so on can be cited.

As the tertiary amine, there can be cited trimethylamine, triethylamine, tripropylamine, tributylamine, trihex-

ylamine, trimethanolamine, triethanolamine, tripropanolamine, tributanolamine, triexanolamine, methyldiethylamine, methyldipropylamine, and so on.

As the cations of the ionic liquid, there can be cited 1-ethyl-3-methylimidazolium ions, 1-methyl-3-propylimidazolium ions, 1-butyl-3-methylimidazolium ions, 1-methyl-3-pentylimidazolium ions, 1-hexyl-3-methylimidazolium ions, and so on.

The second position of the imidazolium ion may be replaced. As the cation resulting from the replacement of the second position of the imidazolium ion, there can be cited a 1-ethyl-2,3-dimethylimidazolium ion, a 1,2-dimethyl-3-propylimidazole ion, a 1-butyl-2,3-dimethylimidazolium ion, a 1,2-dimethyl-3-pentylimidazolium ion, a 1-hexyl-2,3-dimethylimidazolium ion, and so on.

As the pyridinium ions, there can be cited methylpyridinium, ethylpyridinium, propylpyridinium, butylpyridinium, pentylpyridinium, hexylpyridinium, and so on. In the imidazolium ion and the pyridinium ion, an alkyl group may be replaced, or an unsaturated bond may be present.

As the anions, there can be cited fluoride ions ($F^-$), chloride ions ($Cl^-$), bromide ions ($Br^-$), iodide ions ($I^-$), $BF_4^-$, $PF_6^-$, $CF_3COO^-$, $CF_3SO_3^-$, $NO_3^-$, $SCN^-$, $(CF_3SO_2)_3C^-$, bis(trifluoromethoxysulfonyl)imide, bis(trifluoroethoxysulfonyl)imide, bis(perfluoroethylsulfonyl)imide, and so on. Dipolar ions in which the cations and the anions of the ionic liquid are connected by hydrocarbons may also be used. Note that a buffer solution such as a potassium phosphate solution may be supplied to the accommodation parts 22, 26.

As the diaphragm 29, a membrane capable of making anions or cations selectively flow therethrough is used. This allows the first electrolytic solution 21 in contact with the reduction electrode 23 and the second electrolytic solution 25 in contact with the oxidation electrode 27 to be electrolytic solutions containing different substances. Moreover, it is possible to promote a reduction reaction and an oxidation reaction owing to a difference in ionic strength, a difference in pH, and so on. The first electrolytic solution 21 and the second electrolytic solution 25 can be separated using the diaphragm 29. The diaphragm 29 may have a function of allowing the permeation of a part of the ions contained in the first electrolytic solution 21 in which the reduction electrode 23 is immersed and the second electrolytic solution 25 in which the oxidation electrode 27 is immersed, that is, a function of shutting off one or more kinds of ions contained in the first electrolytic solution 21 and the second electrolytic solution 25. This allows the first electrolytic solution 21 and the second electrolytic solution 25 to differ in pH or the like therebetween, for instance.

As the diaphragm 29, for example, there can be used ion exchange membranes such as NEOSEPTA (registered trademark) of ASTOM Corporation, SELEMION (registered trademark) of AGC Inc., Aciplex (registered trademark) of ASAHI KASEI CORPORATION, Fumasep (registered trademark) and fumapem (registered trademark) of Fumatech BWT GmbH, Nafion (registered trademark) of DuPont, which is a fluorocarbon resin formed of sulfonated and polymerized tetrafluoroethylene, lewabrane (registered trademark) of LANXESS AG, IONSEP (registered trademark) of IONTECH Inc., Mustang (registered trademark) of PALL Corporation, ralex (registered trademark) of mega Co., Ltd., and GORE-TEX (registered trademark) of W.L. Gore & Associates GmbH. Further, it may be constituted of the ion exchange membrane using a membrane whose basic structure is hydrocarbons, or in the case of anion exchange, a membrane having an amine group. When a difference in pH is present between the first electrolytic solution 21 and the second electrolytic solution 25, using a bipolar membrane in which a cation exchange membrane and an anion exchange membrane are stacked allows the use with pH of each of the electrolytic solutions kept stable.

As the diaphragm 29 other than the ion exchange membrane, for example, there can be used porous membranes of a silicone resin, a fluorine-based resin such as perfluoroalkoxyalkane (PFA), a perfluoroethylene-propene copolymer (FEP), polytetrafluoroethylene (PTFE), an ethylene-tetrafluoroethylene copolymer (ETFE), polyvinylidene fluoride (PVDF), polychlorotrifluoroethylene (PCTFE), and an ethylene-chlorotrifluoroethylene copolymer (ECTFE), polyethersulfone (PES), a porous membrane of ceramic, insulating porous bodies such as a glass filter, a filling filled with agar or the like, zeolite, and oxide, and the like. A hydrophilic porous membrane is preferably used as the diaphragm 29 because it is not clogged with bubbles.

The reduction electrode 23 is an electrode (cathode) which reduces carbon dioxide ($CO_2$) to produce a carbon compound. The reduction electrode 23 is disposed inside the first chamber 22 and immersed in the first electrolytic solution 21. The reduction electrode 23 contains a reduction catalyst for producing the carbon compound through the reduction reaction of $CO_2$, for instance. As the reduction catalyst, a material which decreases activation energy for reducing $CO_2$ is cited. In other words, a material which lowers overvoltage in producing the carbon compound through the reduction reaction of $CO_2$ is cited.

As the reduction electrode 23, for example, a metal material or a carbon material is usable. As the metal material, for example, metal such as gold, aluminum, copper, silver, platinum, palladium, zinc, mercury, indium, nickel, or titanium, an alloy containing the aforesaid metal, or the like is usable. As the carbon material, for example, graphene, carbon nanotube (CNT), fullerene, ketjen black, or the like is usable. The reduction catalyst is not limited to these, and, for example, a metal complex such as a Ru complex or a Re complex, or an organic molecule having an imidazole skeleton or a pyridine skeleton may be used. The reduction catalyst may be a mixture of a plurality of materials. The reduction electrode 23 may have, for example, a structure in which the reduction catalyst in a thin film form, a lattice form, a granular

form, a wire form, or the like is provided on a conductive base material.

The carbon compound produced through the reduction reaction in the reduction electrode 23 differs depending on the kind of the reduction catalyst and so on, and, for example, there can be cited carbon monoxide (CO), formic acid (HCOOH), methane ($CH_4$), methanol ($CH_3OH$), ethane ($C_2H_6$), ethylene ($C_2H_4$), ethanol ($C_2H_5OH$), formaldehyde (HCHO), ethylene glycol ($C_2H_6O_2$), and the like. The reduction electrode 23 sometimes causes a side reaction to produce hydrogen ($H_2$) through a reduction reaction of water ($H_2O$) simultaneously with the reduction reaction of carbon dioxide ($CO_2$).

The oxidation electrode 27 is an electrode (anode) which oxidizes the substance to be oxidized such as the substance or ions contained in the second electrolytic solution 25. For example, it oxidizes water ($H_2O$) to produce oxygen or a hydrogen peroxide solution or oxidizes chloride ions ($Cl^-$) to produce chlorine. The oxidation electrode 27 is disposed inside the second chamber 26 and immersed in the second electrolytic solution 25. The oxidation electrode 27 contains an oxidation catalyst for the substance to be oxidized. As the oxidation catalyst, a material which decreases activation energy in oxidizing the substance to be oxidized, in other words, a material which lowers reaction overpotential is used.

As such an oxidation catalyst material, for example, metals such as ruthenium, iridium, platinum, cobalt, nickel, iron, and manganese can be cited. Further, binary metal oxide, ternary metal oxide, quaternary metal oxide, or the like is usable. As the binary metal oxide, for example, there can be cited manganese oxide (Mn-O), iridium oxide (Ir-O), nickel oxide (Ni-O), cobalt oxide (Co-O), iron oxide (Fe-O), tin oxide (Sn-O), indium oxide (In-O), ruthenium oxide (Ru-O), and so on. As the ternary metal oxide, for example, Ni-Fe-O, Ni-Co-O, La-Co-O, Ni-La-O, Sr-Fe-O and so on can be cited. As the quaternary metal oxide, for example, Pb-Ru-Ir-O, La-Sr-Co-O, and so on can be cited. The oxidation catalyst is not limited to these, and metal hydroxide containing cobalt, nickel, iron, manganese, or the like or a metal complex such as a Ru complex or an Fe complex can also be used. Further, a plurality of materials may also be mixed to be used.

The oxidation electrode 27 may be formed of a composite material containing both the oxidation catalyst and a conductive material. As the conductive material, for example, there can be cited carbon materials such as carbon black, activated carbon, fullerene, carbon nanotube, graphene, ketjen black, and diamond, transparent conductive oxides such as indium tin oxide (ITO), zinc oxide (ZnO), fluorine-doped tin oxide (FTO), aluminum-doped zinc oxide (AZO), and antimony-doped tin oxide (ATO), metals such as Cu, Al, Ti, Ni, Ag, W, Co, and Au, and an alloy containing at least one of these metals. The oxidation electrode 27 may have, for example, a structure in which the oxidation catalyst in a thin film form, a lattice form, a granular form, a wire form, or the like is provided on a conductive base material. As the conductive base material, for example, a metal material containing titanium, a titanium alloy, or stainless steel is used.

Next, the operation of the electrolysis unit 2 will be described. The description here is about the case where using an aqueous solution containing $CO_2$ and an aqueous potassium hydrogen carbonate ($KHCO_3$) solution as the first electrolytic solution 21 and the second electrolytic solution 25, $CO_2$ is reduced to mainly produce carbon monoxide (CO) and water ($H_2O$) or hydroxide ions ($OH^-$) are oxidized to produce oxygen. The reduction reaction of $CO_2$ is not limited to the production reaction of CO and may be a reaction of production of $C_xH_yO_z$, specifically, production of ethanol ($C_2H_5OH$), ethylene ($C_2H_4$), ethane ($C_2H_6$), methane ($CH_4$), methanol ($CH_3OH$), acetic acid ($CH_3COOH$), propanol ($C_3H_7OH$), or the like.

When a voltage equal to or higher than an electrolysis voltage is applied across the reduction electrode (cathode) 23 and the oxidation electrode (anode) 27, a reduction reaction of $CO_2$ occurs near the reduction electrode 23 in contact with the first electrolytic solution 21. As represented by the following formula (1), electrons ($e^-$) supplied from a power source reduce $CO_2$ contained in the first electrolytic solution 21 to produce carbon monoxide (CO) and hydroxide ions ($OH^-$). As represented by the formula (2) and the formula (3), a part of the produced $OH^-$ reacts with $CO_2$ to produce hydrogen carbonate ions ($HCO_3^-$) or carbonate ions ($CO_3^{2-}$). The voltage across the reduction electrode 23 and the oxidation electrode 27 causes a part of hydroxide ions ($OH^-$), hydrogen carbonate ions ($HCO_3^-$), and carbonate ions ($CO_3^{2-}$) to move into the second electrolytic solution 25 through the diaphragm 29.

$$2CO_2 + 2H_2O + 4e^- \rightarrow 2CO + 4OH^- \ldots \quad (1)$$

$$2CO_2 + 2OH^- \rightarrow 2HCO_3^- \ldots \quad (2)$$

$$2HCO_3^- + 2OH^- \rightarrow CO_3^{2-} + H_2O \ldots \quad (3)$$

Near the oxidation electrode 27 in contact with the second electrolytic solution 25, an oxidation reaction of water ($H_2O$) occurs. As represented by the following formula (4), the oxidation reaction of $H_2O$ contained in the second electrolytic solution 25 occurs, electrons are lost, and oxygen ($O_2$) and hydrogen ions ($H^+$) are produced.

$$2H_2O \rightarrow 4H^+ + O_2 + 4e^- \ldots \quad (4)$$

As represented by the following formula (5) to formula (7), a part of the produced hydrogen ions ($H^+$) reacts with a

part of hydroxide ions ($OH^-$), hydrogen carbonate ions ($HCO_3^-$), or carbonate ions ($CO_3^{2-}$) which have moved through the diaphragm 29 to produce water ($H_2O$) and carbon dioxide ($CO_2$).

$$2H^+ + CO_3^{2-} \rightarrow H_2O + CO_2 \ldots \qquad (5)$$

$$2H^+ + 2HCO_3^- \rightarrow 2H_2O + 2CO_2 \ldots \qquad (6)$$

$$H^+ + OH^- \rightarrow H_2O \ldots \qquad (7)$$

The above describes the operation based on the production of $OH^-$ in the reduction electrode 23, but the operation may be based on the production and movement of $H^+$ in the oxidation electrode 27 as described below. When a voltage equal to or higher than the electrolysis voltage is applied across the reduction electrode 23 and the oxidation electrode 27, an oxidation reaction of water ($H_2O$) occurs near the oxidation electrode 27 in contact with the second electrolytic solution 25. As represented by the following formula (8), the oxidation reaction of $H_2O$ contained in the second electrolytic solution 25 occurs, electrons are lost, and oxygen ($O_2$) and hydrogen ions ($H^+$) are produced. A part of the produced hydrogen ions ($H^+$) moves into the first electrolytic solution 21 through the diaphragm 29.

$$2H_2O \rightarrow 4H + O_2 + 4e^- \ldots \qquad (8)$$

When the hydrogen ions ($H^+$) produced in the oxidation electrode 27 side reach the vicinity of the reduction electrode 23 and electrons ($e^-$) are supplied to the reduction electrode 23 from the power source, a reduction reaction of carbon dioxide ($CO_2$) occurs. As represented by the following formula (9), the hydrogen ions ($H^+$) having moved to the vicinity of the reduction electrode 23 and the electrons ($e^-$) supplied from the power source reduce $CO_2$ contained in the first electrolytic solution 21 to produce carbon monoxide (CO). The reduction product may be supplied to, for example, a valuable material production part.

$$2CO_2 + 4H^+ + 4e^- \rightarrow 2CO + 2H_2O \ldots \qquad (9)$$

The operation parameter input unit 4 has a function of inputting a parameter for operating the electrolysis unit 2, and the input parameter is transmitted to the operation control unit 3 and the data storage unit 11. The operation parameter input unit 4 includes, for example, an input unit and control software of a personal computer and a sequencer, and may further include a keyboard, a mouse, and a touch panel for inputting the parameter to the input unit of the personal computer and the sequencer.

The operation control unit 3 has a function of controlling the operation of the electrolysis unit 2. The operation control unit 3 includes at least one of, for example, a power source control unit, a gas and electrolytic solution control unit, a temperature control unit, a pressure control unit, a humidification control unit, an electrolytic solution concentration control unit, and a trap control unit. Based on parameter data indicating an operation parameter transmitted from the operation parameter input unit 4, a control signal is generated in the operation control unit 3, and operation conditions such as a power source, a temperature, a gas flow rate, an electrolytic solution flow rate, a pressure, and an electrolytic solution concentration are controlled using the control signals. The control signals are each, for example, current or voltage in the power source control unit, for example, a valve opening degree in the gas and electrolytic solution control unit, and heater power, a heater-ON time, or the like in the temperature control unit.

The control signal from the operation control unit 3 is monitored by the control signal monitor unit 5. The control signal monitor unit 5 transmits control signal data indicating a monitoring result of the control signal to the data storage unit 11. Note that the control signal data may be directly transmitted to the data processing unit 12 from the control signal monitor unit 5.

When the operation control unit 3 has, for example, the power source control unit, the control signal monitor unit 5 can monitor a state of the control signal by measuring at least one of current and voltage of the control signals, for instance. In this case, the control signal monitor unit 5 has at least one measuring instrument of an ammeter which measures current and a voltmeter which measures voltage. Without being limited to this, the control signal monitor unit 5 only needs to have a measuring instrument capable of measuring a parameter to be used for the control signal depending on the kind of the control signal from the control units included in the operation control unit 3.

The data storage unit 11 includes a control device such as a computer and has a function of storing data in a recording medium such as a memory, a hard disk, or SSD, and a data transceiving function. The data storage unit 11 may have a display unit including a display having a function of displaying data.

The data processing unit 12 includes a computer such as, for example, a personal computer (PC) or a microcomputer, and performs data processing such as calculation of a deterioration degree based on the control signal using the control signal data and the parameter data transmitted from the data storage unit 11. Moreover, it determines

whether to continue the operation of the electrolysis unit 2, whether to execute a refresh operation, or whether to stop the operation, based on information of the deteriorated degree, and transmits a command to the operation control unit 3. Note that the data processing may be performed with the operation of the electrolysis unit 2 maintained, or may be performed after a stop of the operation of the electrolysis unit 2.

The data processing unit 12 may be configured using hardware using, for example, a processor or the like. Note that by storing operations as operation programs in a computer-readable recording medium such as the data storage unit 11 and appropriately reading the operation programs stored in the recording medium with the hardware, the operations may be executed.

The data processing unit 12 is provided near the electrolysis unit 2 in some cases, or is provided in a cloud and remotely performs a state diagnosis in the other cases. Installing the data processing unit 12 in the cloud enables the integrated management of stored data of the electrolysis units 2 provided at various places to allow improvement in accuracy of the state diagnosis such as deterioration detection, and thus the data processing unit 12 is preferably provided in the cloud.

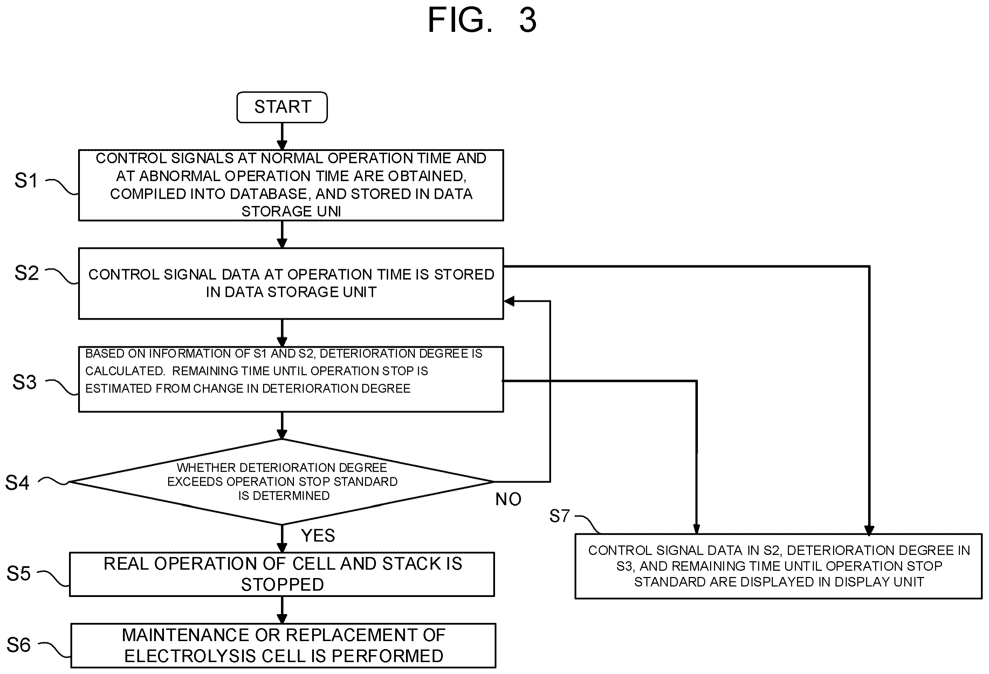

Next, a deterioration detection method which is a state diagnosis method using the electrolysis device 1 will be described with reference to FIG. 3. FIG. 3 is a flowchart for explaining the state diagnosis method using the electrolysis device. First, control signal data at a normal operation time and control signal data at an abnormal operation time are stored in the data storage unit 11 (S1). Then, control signal data at a real operation time (operation data) is stored in the data storage unit 11 (S2). A deterioration degree is calculated by comparison with the control signal data at the normal operation time (normal data) or the control signal data at the abnormal operation time (abnormal data) (S3). Further, the deterioration degree may be calculated using a variation of the control signal data relative to an elapsed operating time. Then, the remaining time (operating life) until an operation stop is estimated from a change in the deterioration degree (S3). The determination whether the deterioration degree exceeds an operation stop standard is made (S4), and in a case of exceeding the operation stop standard (S4: YES), the real operation of the electrolysis cell and an electrolysis stack is stopped (S5). A case of not exceeding the operation stop standard (S4: NO) results in a return to S2. The maintenance or the replacement of the electrolysis cell according to a deteriorated position is performed at the stop time (S6). The control signal data stored in the data storage unit 11 in S2, the deterioration degree calculated in S3, and the operating life until the operation stop are transmitted to the display unit included in the data storage unit 11, and displayed in the display included in the display unit (S7).

Next, a calculation method of the deterioration degree based on the control signal in the data processing unit 12 will be described. A deterioration degree A represented by the following formula (10) is preferably calculated using the control signal data transmitted from the data storage unit 11 during a real operation.

A = [(control signal data during real operation) - (control signal data at normal operation time)]/(control signal data at normal operation time) (10)

Setting a determination standard for A makes it possible to determine the operation stop, the refresh operation, and the maintenance. Further, the control signal data at the abnormal operation time may be set as the determination standard.

Further, a change over time of the control signal data can be represented by, for example, a regression formula of a linear function indicated below.

$$B(t) = at + b \quad ... (11)$$

Here, a is a variation of a control signal per unit time and b is an intercept. Using the formula (11) enables the estimation of the remaining time until the determination standard. Note that an approximate formula of a change over time of B is not limited to the formula (11) and may be a quadratic formula or a polynomial. Further, the deterioration degree and the remaining time until the determination standard may be estimated by machine learning using a plurality of pieces of the control signal data stored in the data storage unit 11.

As described above, the electrolysis device of the arrangement monitors the control signal from the operation control unit 3 and performs the state diagnosis, thereby allowing, for example, the diagnosis of the deterioration state of the electrolysis cell. Further, the electrolysis device of the arrangement performs the state diagnosis using the control signal data, thus making it possible to detect an abnormal operation from the control signal data, for example, even though an output characteristic of the electrolysis cell is normal.

(Second arrangement)

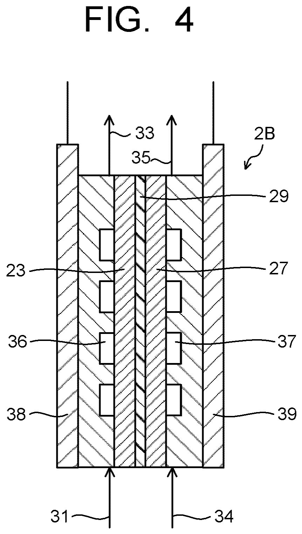

An example configuration of an electrolysis device of a second arrangement will be described with reference to FIG. 1 and FIG. 4. The electrolysis device of the second arrangement differs in a configuration of an electrolysis cell in an electrolysis unit 2 as compared with the electrolysis device of the first arrangement. Hereinafter, parts different from those of the first arrangement are described, and the other parts can be appropriately quoted from the description of the first arrangement.

FIG. 4 illustrates an electrolysis cell 2B. In an electrolysis device 1 of the second arrangement, a contact form of a gas containing $CO_2$ (sometimes mentioned simply as a $CO_2$ gas) with a reduction electrode 23 and a contact form of a second electrolytic solution (anode solution) containing water with an oxidation electrode 27 in the electrolysis cell 2B are different from those in the electrolysis cell 2A of the first arrangement. The electrolysis cell 2B of the electrolysis device 1 of the second arrangement differs in the configuration from the electrolysis cell 2A according to the first arrangement. Except for the above, the configurations of its parts, for example, the specific configurations of the reduction electrode 23, the oxidation electrode 27, a diaphragm 29, the second electrolytic solution, and so on are the same as those of the first arrangement.

As illustrated in FIG. 4, the electrolysis cell 2B includes the reduction electrode 23, the oxidation electrode 27, the diaphragm 29, a first flow path 36 which makes the gas containing $CO_2$ flow therethrough, a second flow path 37 which makes the second electrolytic solution (anode solution) containing water flow therethrough, a first current collector plate 38 electrically connected to the reduction electrode 23, and a second current collector plate 39 electrically connected to the oxidation electrode 27. The reduction electrode 23 and the first flow path 36 facing it can form a cathode part (reduction electrode chamber) 24. The oxidation electrode 27 and the second flow path 37 facing it can form an anode part (oxidation electrode chamber) 28.

In the second arrangement, a first electrolytic solution 21 containing $CO_2$ instead of the gas containing $CO_2$ may be made to flow through the first flow path 36. Further, it is also allowable to provide a flow path whose illustration is omitted between the reduction electrode 23 and the diaphragm 29, make the gas containing $CO_2$ flow through the first flow path 36, and make the first electrolytic solution 21 flow through the flow path between the reduction electrode 23 and the diaphragm 29. The first electrolytic solution 21 used in this case may contain $CO_2$ or may be one not containing $CO_2$. Further, instead of the second electrolytic solution 25 containing water, a gas containing water vapor is also usable.

In the operation of the electrolysis cell 2B, a reduction product of $CO_2$ or a component of the second electrolytic solution having moved to the reduction electrode 23 side may solidify to precipitate in the first flow path 36, thereby clogging the first flow path 36 to stop the supply of the gas containing $CO_2$. Therefore, in order to inhibit the formation of the precipitates, the gas containing $CO_2$ is preferably humidified to cause the presence of moisture in the gas containing $CO_2$. On the other hand, too high a moisture content in the gas containing $CO_2$ is not preferable because a large amount of moisture is supplied to the surface of a catalyst in the reduction electrode 23 to easily cause the production of hydrogen. Therefore, the moisture content in the gas containing $CO_2$ is preferably 20 to 90% and more preferably 30 to 70% in terms of relative humidity.

A first gas supply flow path 31 which supplies the gas containing $CO_2$ and a first discharge flow path 33 which discharges a produced gas are connected to the first flow path 36. A second liquid supply flow path 34 which supplies the electrolytic solution containing water and a second discharge flow path 35 are connected to the second flow path 37. The first flow path 36 is disposed to face the reduction electrode 23. The first flow path 36 is connected to the first gas supply flow path 31 and configured to be supplied with the gas containing $CO_2$ from the first gas supply flow path 31. The electrolysis cell 2B is configured so that the $CO_2$ gas or the first electrolytic solution (cathode solution) comes into contact with the reduction electrode 23 in flowing in the first flow path 36. $CO_2$ in the $CO_2$ gas or the cathode solution passing through the reduction electrode 23 is reduced by the reduction electrode 23. A gas or solution containing a reduction reaction product of $CO_2$ is discharged from the first discharge flow path 33.

The second flow path 37 is disposed to face the oxidation electrode 27. A solution tank whose illustration is omitted, or the like is connected to the second flow path 37, and the electrolysis cell 2B is configured so that the anode solution comes into contact with the oxidation electrode 27 in flowing in the second flow path 37. $H_2O$ in the anode solution passing through the oxidation electrode 27 is oxidized by the oxidation electrode 27.

To the electrolysis device using the electrolysis cell 2B of the second arrangement, the state diagnosis method illustrated in FIG. 1 and FIG. 3 can be applied as applied to the electrolysis device of the first arrangement. For example, it is possible to calculate the deterioration degree A, set the determination standard for the deterioration degree A, and determine the operation stop, the refresh operation, and the maintenance.

(Third arrangement)

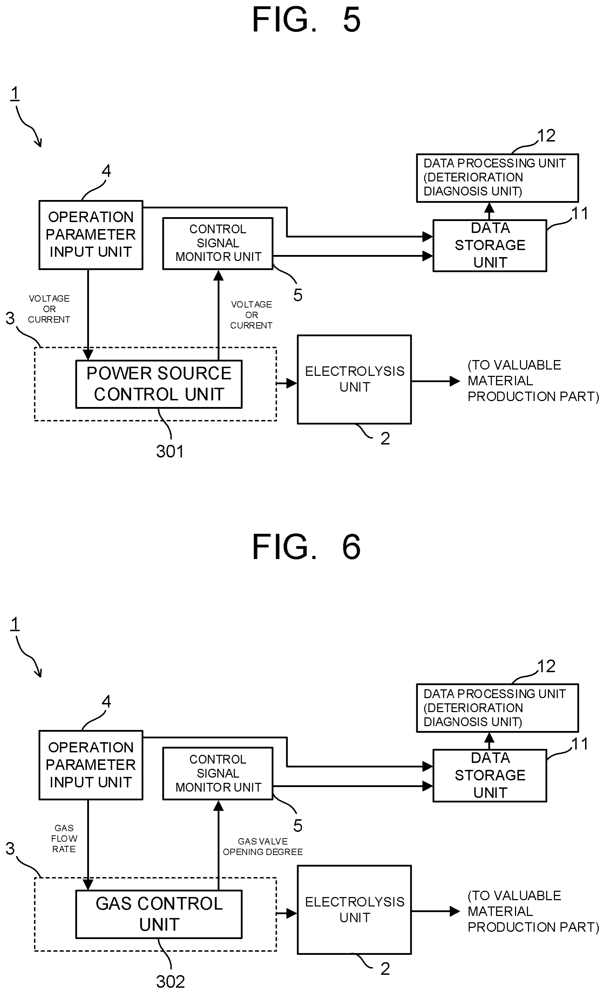

An example configuration of an electrolysis device of a third arrangement will be described with reference to FIG. 1 and FIG. 5. The electrolysis device of the third arrangement monitors a control signal from a power source control unit 301

included in an operation control unit 3 with a control signal monitor unit 5, stores control signal data indicating a monitoring result in a data storage unit 11, and performs data processing with a data processing unit 12 using parameter data and the control signal data, thereby, for example, detecting a deterioration. A configuration of an electrolysis unit 2 in the third arrangement is the same as the configuration of the electrolysis unit 2 in the second arrangement. Hereinafter, the part different from that of the first arrangement is described, and the other parts can be appropriately quoted from the description of the first arrangement.

The power source control unit 301 has a power source and electric devices such as a DC/AC converter, a DC/DC converter, an AC/DC converter, an inverter, a converter, and switches. The power source control unit 301 may be connected to a power source which converts renewable energy to electric energy to supply it or may be connected to a typical commercial power source, battery, or the like. As examples of the power source using the renewable energy, there can be cited a power source which converts kinetic energy or potential energy such as wind power, water power, geothermal power, or tidal power to electric energy, a power source such as a solar cell having a photoelectric conversion element which converts light energy to electric energy, a power source such as a fuel cell or a storage battery which converts chemical energy to electric energy, a power source which converts vibrational energy such as sound to electric energy, and the like.

A state diagnosis method using an electrolysis device 1 in the third arrangement will be described with reference to FIG. 5. When an operation voltage is input to the power source control unit 301 as an operation parameter, the power source control unit 301 controls a current to maintain this operation voltage. This current is monitored by the control signal monitor unit 5 as a control signal, and control signal data indicating the current is stored in the data storage unit 11. On the other hand, when an operation current is input thereto as an operation parameter, it controls a voltage to maintain this operation current. This voltage is monitored by the control signal monitor unit 5 as a control signal, and control signal data indicating the voltage is stored in the data storage unit 11.

A deterioration of an electrolysis cell causes resistance components or a $CO_2$ reduction reaction, thus increasing a required voltage. Therefore, the current serving as the control signal decreases to maintain the operation voltage, resulting in that the voltage serving as the control signal increases to maintain the operation current. It is possible to monitor one of these current and voltage as the control signal data and, for example, to diagnose the deterioration by the state diagnosis method of the first arrangement.

(Fourth arrangement)

An example configuration of an electrolysis device of a fourth arrangement will be described with reference to FIG. 1 and FIG. 6. The electrolysis device of the fourth arrangement monitors a control signal from a gas control unit 302 included in an operation control unit 3 with a control signal monitor unit 5, stores control signal data indicating a monitoring result in a data storage unit 11, and performs data processing with a data processing unit 12 using parameter data and the control signal data, thereby, for example, detecting a deterioration. A configuration of an electrolysis unit 2 in the fourth arrangement is the same as, for example, the configuration of the electrolysis unit 2 in the second arrangement. Hereinafter, the part different from that of the first arrangement is described, and the other parts can be appropriately quoted from the description of the first arrangement.

The gas control unit 302 has, for example, a container such as a tank or a cylinder cabinet which accommodates a gas containing a reducible material, and a gas valve which controls a flow rate of the gas supplied to the electrolysis unit 2 from the container.

A state diagnosis method using an electrolysis device 1 in the fourth arrangement will be described with reference to FIG. 6. When a gas flow rate is input as an operation parameter, the gas control unit 302 varies an opening degree of the gas valve to maintain this gas flow rate. The opening degree of the gas valve is controlled by an electrical signal of the gas control unit 302. This electrical signal is monitored by the control signal monitor unit 5 as a control signal, and the control signal data indicating the electrical signal is stored in the data storage unit 11.

For example, when salt contained in an electrolytic solution precipitates in a first flow path 36 of an electrolysis cell through which a $CO_2$ gas flows, thereby causing abnormality such as a pressure loss or the like, the opening degree of the gas valve is varied to maintain the gas flow rate. It is possible to monitor, as the control signal data, the electrical signal for varying this opening degree and, for example, to diagnose a deterioration by the state diagnosis method of the first arrangement.

(Fifth arrangement)

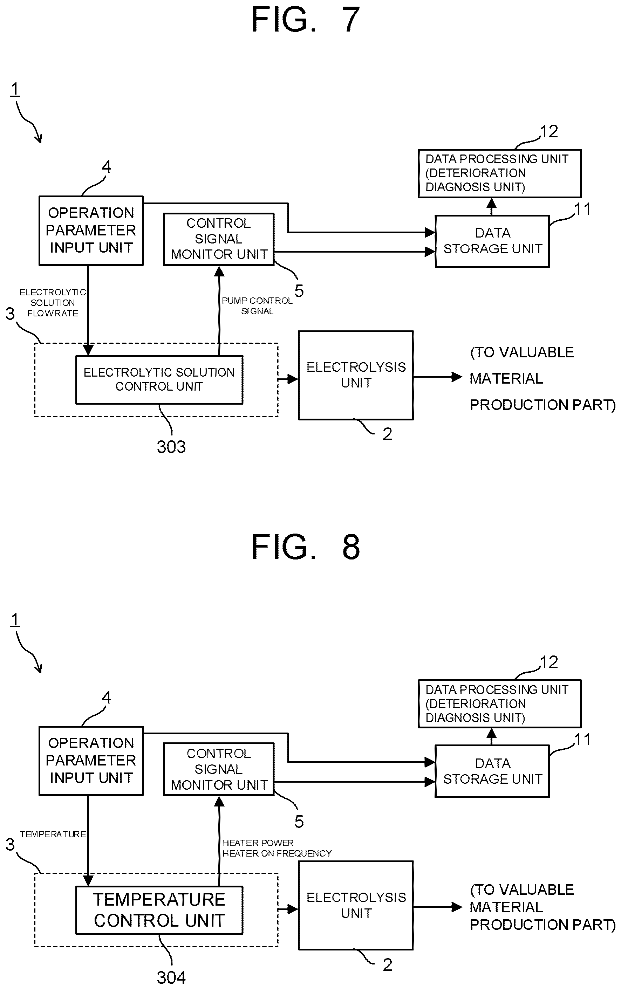

An example configuration of an electrolysis device of a fifth arrangement will be described with reference to FIG. 1 and FIG. 7. The electrolysis device of the fifth arrangement monitors a control signal from an electrolytic solution control unit 303 included in an operation control unit 3 with a control signal monitor unit 5, stores control signal data indicating a monitoring result in a data storage unit 11, and performs data processing with a data processing unit 12 using parameter

data and the control signal data, thereby, for example, detecting a deterioration. A configuration of an electrolysis unit 2 in the fifth arrangement is the same as, for example, the configuration of the electrolysis unit 2 in the second arrangement.

The electrolytic solution control unit 303 has, for example, a container such as a tank or a cylinder cabinet which accommodates an electrolytic solution containing an oxidizable material, and a pump which controls a flow rate of the electrolytic solution supplied to the electrolysis unit 2 from the container.

A state diagnosis method using an electrolysis device 1 in the fifth arrangement will be described with reference to FIG. 7. When an electrolytic solution flow rate is input as an operation parameter, the electrolytic solution control unit 303 controls the pump to maintain this electrolytic solution flow rate. A control signal for this pump is monitored by the control signal monitor unit 5 as a control signal for the electrolysis unit 2, and control signal data indicating an electrical signal is stored in the data storage unit 11.

When abnormality such as a pressure loss or the like occurs in the second flow path 37 through which the electrolytic solution flows, the control signal for the pump is varied to maintain the electrolytic solution flow rate. It is possible to monitor the control signal from the electrolytic solution control unit 303 as the control signal data and, for example, to diagnose a deterioration of an electrolysis cell by the state diagnosis method of the first arrangement.

(Sixth arrangement)

An example configuration of an electrolysis device of a sixth arrangement will be described with reference to FIG. 1 and FIG. 8. The electrolysis device of the sixth arrangement monitors a control signal from a temperature control unit 304 included in an operation control unit 3 with a control signal monitor unit 5, stores control signal data indicating a monitoring result in a data storage unit 11, and performs data processing with a data processing unit 12 using parameter data and the control signal data, thereby, for example, detecting a deterioration. A configuration of an electrolysis unit 2 in the sixth arrangement is the same as, for example, the configuration of the electrolysis unit 2 in the second arrangement. Hereinafter, the part different from that of the first arrangement is described, and the other parts can be appropriately quoted from the description of the first arrangement.

The temperature control unit 304 has a heater which regulates a temperature of the electrolysis unit 2, and a temperature controller which controls operation of the heater.

A state diagnosis method using an electrolysis device 1 in the sixth arrangement will be described with reference to FIG. 8. When a temperature is input as an operation parameter, the temperature control unit 304 controls heater power and an ON frequency of the heater to maintain this temperature. Pulse signals to control these heater power, and ON state and OFF state of the heater are monitored by the control signal monitor unit as control signals, control signal data indicating a monitoring result is stored in the data storage unit 11, and data processing is performed by the data processing unit 12 using parameter data and the control signal data, thereby, for example, detecting a deterioration.

When a deterioration degree A is found, the formula (10) is converted as follows, for instance. The ON frequency may be found from, for example, the number of pulses of the control signals per predetermined time through monitoring a change over time of the control signal data.

Deterioration degree A = [(control signal data during real operation (ON frequency (number of pulses))) - (control signal data at normal operation time (ON frequency (number of pulses)))]/(control signal data at normal operation time) (10)

A deterioration of an electrolysis cell causes resistance components or a $CO_2$ reduction reaction, thus increasing a required voltage. In a case of maintaining an operation current, this causes an increase in Joule heat which is being generated in the electrolysis cell, resulting in a decrease in the heater power and the heater ON frequency for maintaining a cell temperature. It is possible to monitor, as the control signal data, the pulse signals for setting these heater power and heater ON frequency and, for example, to diagnose the deterioration of the electrolysis cell by the state diagnosis method of the first arrangement.

(Seventh arrangement)

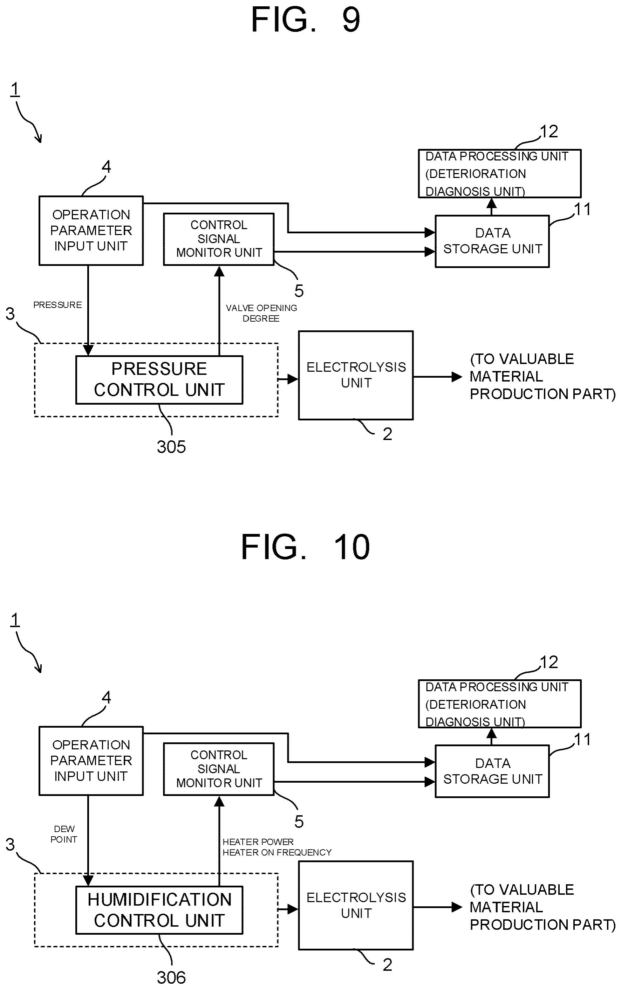

An example configuration of an electrolysis device of a seventh arrangement will be described with reference to FIG. 1 and FIG. 9. The electrolysis device of the seventh arrangement monitors a control signal from a pressure control unit 305 included in an operation control unit 3 with a control signal monitor unit 5, stores control signal data indicating a monitoring result in a data storage unit 11, and performs data processing with a data processing unit 12 using parameter data and the control signal data, thereby, for example, detecting a deterioration. A configuration of an electrolysis unit 2 in the seventh arrangement is the same as, for example, the configuration of the electrolysis unit 2 in the second arrangement. Hereinafter, the part different from that of the first arrangement is described, and the other parts can be

appropriately quoted from the description of the first arrangement.

The pressure control unit 305 has a pressure-regulating valve provided on the way of a first flow path 36.

A deterioration detection method according to the seventh arrangement will be described with reference to FIG. 9. When a pressure is input as an operation parameter, the pressure control unit 305 varies a valve opening degree of the pressure-regulating valve to maintain this pressure. The valve opening degree can be controlled by an electrical signal of the pressure control unit 305. The electrical signal may be, for example, an analog signal. This electrical signal is monitored by the control signal monitor unit 5 as a control signal, and the control signal data indicating the electrical signal is stored in the data storage unit 11.

When salt contained in an electrolytic solution precipitates in the first flow path 36 of an electrolysis cell through which a $CO_2$ gas flows, thereby causing abnormality such as a pressure loss or the like, the opening degree of the pressure-regulating valve is varied to maintain the pressure. It is possible to monitor, as the control signal, the electrical signal for setting this opening degree and, for example, to diagnose a deterioration of the electrolysis cell by the state diagnosis method of the first arrangement.

(Eighth arrangement)

An example configuration of an electrolysis device of an eighth arrangement will be described with reference to FIG. 1 and FIG. 10. The electrolysis device of the eighth arrangement monitors a control signal from a humidification control unit 306 included in an operation control unit 3 with a control signal monitor unit 5, stores control signal data indicating a monitoring result in a data storage unit 11, and performs data processing with a data processing unit 12 using parameter data and the control signal data, thereby, for example, detecting a deterioration. A configuration of an electrolysis unit 2 in the eighth arrangement is the same as the configuration of the electrolysis unit 2 in the second arrangement. Hereinafter, the part different from that of the first arrangement is described, and the other parts can be appropriately quoted from the description of the first arrangement.

The humidification control unit 306 controls humidification of the gas supplied to the electrolysis unit 2. The humidification control unit 306 has, for example, a humidifier, and a heater which controls a humidification temperature of the humidifier.

A state diagnosis method using an electrolysis device 1 in the eighth arrangement will be described with reference to FIG. 10. When a dew point is input as an operation parameter, the humidification control unit 306 varies a temperature of the humidifier to maintain this dew point. The temperature can be controlled by the heater. This heater power is monitored by the control signal monitor unit 5 as a control signal, and the control signal data indicating an electrical signal is stored in the data storage unit 11. Thus, it is possible to monitor the control signal from the humidification control unit 306 as the control signal data and, for example, to diagnose a deterioration of an electrolysis cell by the state diagnosis method of the first arrangement.

(Ninth arrangement)

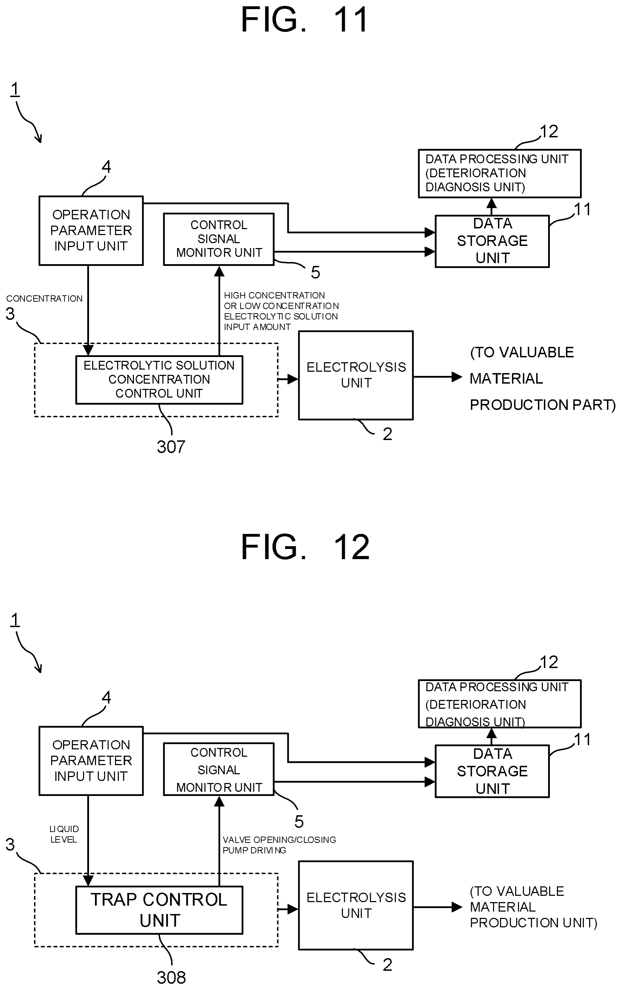

An example configuration of an electrolysis device of a ninth arrangement will be described with reference to FIG. 1 and FIG. 11. The electrolysis device of the ninth arrangement detects a deterioration using a control signal from an electrolytic solution concentration control unit 307 included in an operation control unit 3. A configuration of an electrolysis unit 2 in the ninth arrangement is the same as the configuration of the electrolysis unit 2 in the second arrangement. Hereinafter, the part different from that of the first arrangement is described, and the other parts can be appropriately quoted from the description of the first arrangement.

The electrolytic solution concentration control unit 307 has a first tank which accommodates a high-concentration electrolytic solution, a second tank which accommodates a low-concentration electrolytic solution, and a pump which regulates flow rates of the electrolytic solutions supplied to the electrolysis unit 2 from the first tank and the second tank. The electrolytic solution concentration control unit 307 may have a flowmeter which measures the flow rates of the electrolytic solutions.

A state diagnosis method using an electrolysis device 1 in the ninth arrangement will be described with reference to FIG. 11. When an electrolytic solution concentration is input as an operation parameter, the electrolytic solution concentration control unit 307 controls an additional amount of the high-concentration electrolytic solution or the low-concentration electrolytic solution to maintain this concentration. The additional amount can be controlled by an additional pump. A driving time of this pump and a measured value of the flow rate of the electrolytic solution are monitored by a control signal monitor unit 5 as control signals, and control signal data indicating electrical signals is stored in a data storage unit 11. Thus, it is possible to monitor the control signals from the electrolytic solution concentration control unit 307 as the control signal data and, for example, to diagnose a deterioration of an electrolysis cell by the state diagnosis method of the first arrangement.

(Tenth arrangement)

An example configuration of an electrolysis device of a tenth arrangement will be described with reference to FIG. 1 and FIG. 12. The electrolysis device of the tenth arrangement monitors a control signal from a trap control unit 308 included in an operation control unit 3 with a control signal monitor unit 5, stores control signal data indicating a monitoring result in a data storage unit 11, and performs data processing with a data processing unit 12 using parameter data and the control signal data, thereby, for example, detecting a deterioration. A configuration of an electrolysis unit 2 in the tenth arrangement is the same as the configuration of the electrolysis unit 2 in the second arrangement. Hereinafter, the part different from that of the first arrangement is described, and the other parts can be appropriately quoted from the description of the first arrangement.

The trap control unit 308 has a trap and a liquid level indicator provided in the trap. The trap is a container provided to remove moisture from a gas containing water vapor output from a cathode part. The trap is provided in a subsequent stage of an electrolysis cell. With the liquid level indicator provided inside the trap, the moisture accumulated in the trap can be discharged outside the trap when a discharge solution containing water reaches a set liquid level.

A state diagnosis method using an electrolysis device 1 in the tenth arrangement will be described with reference to FIG. 12. In the liquid level indicator in the trap, when a liquid level of the discharge solution reaches a high level set beforehand, a drain valve of a pipe provided in the trap is opened to drain water to a low liquid level lower than the high level. Further, the drain valve may be opened for a predetermined time. In addition, a pump for draining water may be provided. A frequency with which this drain valve is opened (valve opening frequency) is monitored by the control signal monitor unit 5 as a control signal, and the control signal data indicating an electrical signal is stored in the data storage unit 11.

When a deterioration degree A is calculated, the formula (10) is converted as follows, for instance. The valve opening frequency may be found from, for example, the number of pulses of control signals per predetermined time through monitoring a change over time of the control signal data.

Deterioration degree A = [(control signal data during real operation (valve opening frequency (number of pulses))) - (control signal data at normal operation time (valve opening frequency (number of pulses)))]/(control signal data at normal operation time) ... (10)

Thus, it is possible to monitor the control signal from the trap control unit 308 as the control signal data and, for example, to diagnose a deterioration of the electrolysis cell by the state diagnosis method of the first arrangement.

(Eleventh arrangement)

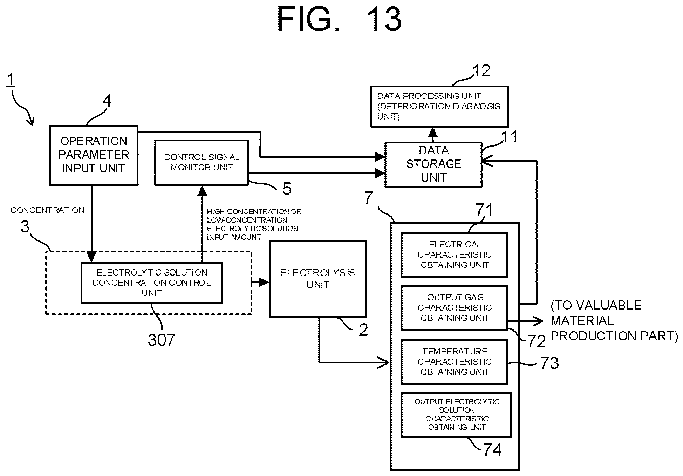

An example configuration of an electrolysis device of an eleventh arrangement will be described with reference to FIG. 13. The electrolysis device of the eleventh arrangement further has an output characteristic obtaining unit 7 of an electrolysis device 2. The electrolysis device of the eleventh arrangement monitors a control signal from a trap control unit 308 included in an operation control unit 3 with a control signal monitor unit 5, stores control signal data indicating a monitoring result in a data storage unit 11, and performs data processing with a data processing unit 12 using parameter data, the control signal data, and output characteristic data, thereby, for example, detecting a deterioration. Hereinafter, the parts different from those of the first arrangement are described, and the other parts can be appropriately quoted from the description of the first arrangement.

The output characteristic obtaining unit 7 includes at least one of an electrical characteristic obtaining unit 71 configured to obtain electrical characteristics, an output gas characteristic obtaining unit 72 configured to obtain characteristics of an output gas, a temperature characteristic obtaining unit 73 configured to obtain temperatures of an electrolysis cell, a gas, and an electrolytic solution, and an output electrolytic solution characteristic obtaining unit 74 configured to obtain a conductivity, pH, and a concentration of an electrolytic solution.

The electrical characteristic obtaining unit 71 can obtain electrical characteristics such as a cell voltage and a cell current of the electrolysis cell. A reference electrode may be incorporated into the cell or a pipe to obtain electric potentials of a cathode and an anode relative to the reference electrode. Further, it may have a function of obtaining an impedance of the electrolysis cell. The electrical characteristics are transmitted to the data storage unit 11 through a signal line.

The output gas characteristic obtaining unit 72 obtains a flow rate of the gas output from the cathode side of the electrolysis cell and concentrations of $CO_2$ and various gases produced through a $CO_2$ reduction reaction. It may further have a function of obtaining concentrations of $H_2$ and other gases produced through a side reaction. Further, it may have a function of obtaining flow rates of $O_2$ and $CO_2$ which are output from the anode side and concentrations of the gases. The output gas characteristics are transmitted to the data storage unit 11 through a signal line.

The temperature characteristic obtaining unit 73 obtains the temperatures of the electrolysis cell, the gas, the electrolytic solution, and the like. The temperatures can be obtained by a temperature sensor such as a thermocouple or a

non-contact temperature sensor using infrared rays. Temperature data is transmitted to the data storage unit through a signal line. Temperature characteristics are transmitted to the data storage unit 11 through the signal line.

The output electrolytic solution characteristic obtaining unit 74 can obtain a conductivity, pH, and a concentration of the electrolytic solution output from the electrolysis cell. The conductivity, the pH, and the concentration of the electrolytic solution can be obtained by, for example, a conductivity sensor, a pH sensor, and a concentration sensor, respectively. The output electrolytic solution characteristic data is transmitted to the data storage unit 11 through a signal line.

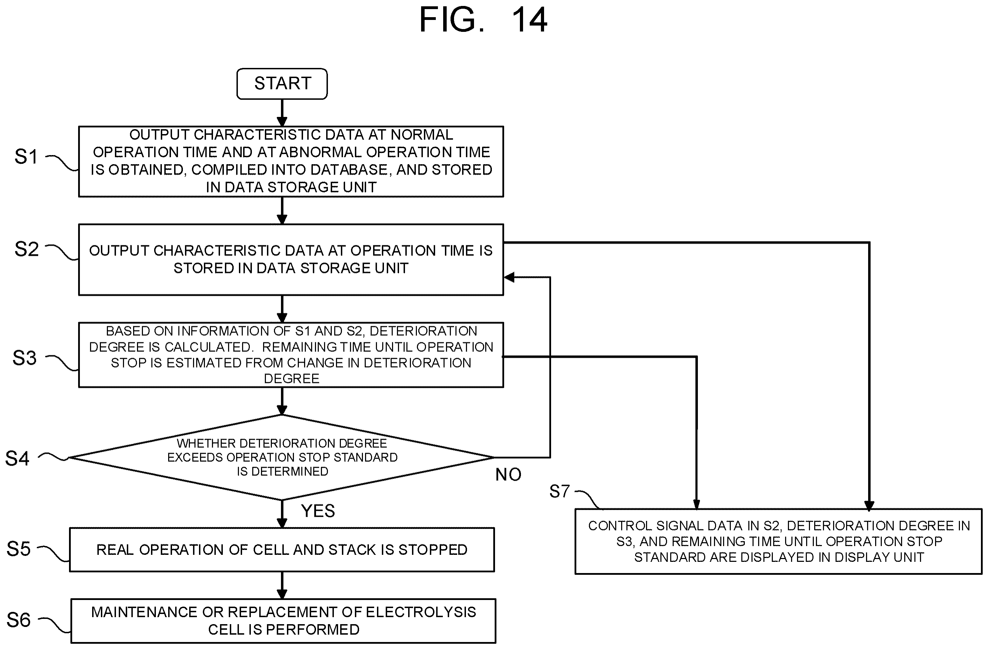

Next, a deterioration detection method which is a state diagnosis method using an electrolysis device 1 will be described with reference to FIG. 14. FIG. 14 is a flowchart for explaining the state diagnosis method using the electrolysis device 1. First, control signal data at a normal operation time and cell output characteristic data at an abnormal operation time are stored in the data storage unit (S1). Then, output characteristic data at a real operation time is stored in the data storage unit (S2). A deterioration degree is calculated by comparison with output characteristic data at the normal operation time or at the abnormal operation time (S3). Further, the deterioration degree may be calculated using a variation of the output characteristic data relative to an elapsed operating time. Then, the remaining time (operating life) until an operation stop is estimated from a change in the deterioration degree (S3). The determination whether the deterioration degree exceeds an operation stop standard is made (S4), and in a case of exceeding the operation stop standard (S4: YES), the real operation of the electrolysis cell and an electrolysis stack is stopped (S5). The maintenance or the replacement of the electrolysis cell according to a deteriorated position is performed at the stop time (S6). A case of not exceeding the operation stop standard (S4: NO) results in a return to S2. The output characteristic data stored in the data storage unit in S2, the deterioration degree calculated in S3, and the operating life until the operation stop are transmitted to a display unit included in the data storage unit 11, and displayed in a display included in the display unit (S7).

Next, a calculation method of a deterioration degree based on the output characteristic data in the data processing unit 12 will be described. A deterioration degree D represented by the following formula (12) is preferably calculated using the output characteristic data transmitted from the data storage unit 11 during a real operation.

D = [(output characteristic data during real operation) - (output characteristic data at normal operation time)]/ (output characteristic data at normal operation time) (12)

Setting a determination standard for D makes it possible to determine the operation stop, a refresh operation, and the maintenance. Further, the output characteristic data at the abnormal operation time may be set as a determination standard.

Further, a change over time of the output characteristic data can be represented by, for example, a regression formula of a linear function indicated in the following formula (13).

$$B(t) = at + b \quad ... (13)$$

Here, a is a variation of a control signal per unit time and b is an intercept. Using the formula (13) enables the estimation of the remaining time until the determination standard. Note that an approximate formula of the change over time in B is not limited to the formula (13) and may be a quadratic formula or a polynomial. Further, the deterioration degree and the remaining time until the determination standard may be estimated by machine learning using a plurality of pieces of the output characteristic data stored in the data storage unit.

The deterioration of the electrolysis cell is detected using a method of either the deterioration detection using the control signal data from the operation control unit 3 or the deterioration detection using the output characteristic data of the electrolysis cell. Further, the deterioration of the electrolysis cell may be detected by comparing the control signal data from the operation control unit 3 and the output characteristic data of the electrolysis cell. For example, even when the output characteristic data of the electrolysis cell is judged data at the normal time, the control signal data from the operation control unit 3 may be judged data at the abnormal time.

(Twelfth arrangement)

An example configuration of an electrolysis device of a twelfth arrangement will be described with reference to FIG. 1. The electrolysis device of the twelfth arrangement is the same as the electrolysis device of the first arrangement. The twelfth arrangement differs from the first arrangement in that a substance reduced in the first accommodation part of the electrolysis cell is nitrogen ($N_2$). A first electrolytic solution accommodated in the first accommodation part contains $N_2$. Hereinafter, the part different from that of the first arrangement is described, and the other parts can be appropriately quoted from the description of the first arrangement.

When nitrogen is reduced, the first electrolytic solution preferably contains an ammonia production catalyst and a

reducing agent which reduce $N_2$ to produce ammonia, separately from an electrochemical reaction. Here, as the reducing agent, for example, a halide (II) of a lanthanoid metal is used. As the lanthanoid-based metal, there can be cited lanthanum (La), cerium (Ce), praseodymium (Pr), neodymium (Nd), promethium (Pm), samarium (Sm), europium (Eu), gadolinium (Gd), terbium (Tb), dysprosium (Dy), holmium (Ho), erbium (Er), thulium (Tm), ytterbium (Yb), and lutetium (Lu), among which Sm is preferable. As halogen, chlorine (Cl), bromide (Br), and iodine (I) can be cited, and among them, iodine is preferable. As the halide (II) of the lanthanoid-based metal, samarium(II) iodide ($SmI_2$) is more preferable.

The ammonia production catalyst promotes the production of ammonia from nitrogen under the presence of the reducing agent. As the ammonia production catalyst, for example, a molybdenum complex is used, but this is not restrictive. As the ammonia production catalyst, for example, molybdenum complexes (A) to (D) listed below can be cited.

As a first example, there can be cited (A) a molybdenum complex having, as a PCP ligand, N,N-bis(dialkylphosphinomethyl)dihydrobenzo imidazolidene (where the two alkyl groups may be identical or may be different, and at least one hydrogen atom of the benzene ring may be replaced by an alkyl group, an alkoxy group, or a halogen atom).

As a second example, there can be cited (B) a molybdenum complex having, as a PNP ligand, 2,6-bis(dialkylphosphinomethyl)pyridine (where the two alkyl groups may be identical or may be different, and at least one hydrogen atom of the pyridine ring may be replaced by an alkyl group, an alkoxy group, or a halogen atom.).

As a third example, there can be cited (C) a molybdenum complex having, as a PPP ligand, bis(dialkylphosphinomethyl)arylphosphine (where the two alkyl groups may be identical or may be different.).

As a fourth example, there can be cited (D) a molybdenum complex represented by trans-$Mo(N_2)_2(R1R2R3P)_4$ (where R1, R2, and R3 are alkyl groups or aryl groups which may be identical or may be different, and two R3's may be linked to each other to form an alkylene chain.).

In the above molybdenum complexes, the alkyl group may be, for example, a methyl group, an ethyl group, a propyl group, a butyl group, a pentyl group, a hexyl group, or a straight-chain or branched alkyl group such as a structural isomer of any of these, or may be a cyclic alkyl group such as a cyclopropyl group, a cyclobutyl group, a cyclopentyl group, or a cyclohexyl group. The carbon number of the alkyl group is preferably 1 to 12, and more preferably 1 to 6. The alkoxy group may be, for example, a methoxy group, an ethoxy group, a propoxy group, a butoxy group, a pentoxy group, a hexyloxy group, or a straight-chain or branched alkoxy group such as a structural isomer of any of these, or may be a cyclic alkoxy group such as a cyclopropoxy group, a cyclobutoxy group, a cyclopentoxy group, or a cyclohexyloxy group. The carbon number of the alkoxy group is preferably 1 to 12, and more preferably 1 to 6. As the halogen atom, for example, a fluorine atom, a chlorine atom, a bromine atom, an iodine atom, and the like can be cited.

The amount of the ammonia production catalyst to be used may be appropriately selected within a range of 0.00001 to 0.1 mol/L equivalent weight, and is preferably 0.0001 to 0.05 mol/L equivalent weight, and more preferably 0.0005 to 0.01 mol/L equivalent weight, relative to the second electrolytic solution.

Next, the operation of the electrolysis unit 2 when ammonia is produced by the reduction reaction of nitrogen will be described. When a voltage equal to or higher than an electrolysis voltage is applied across the reduction electrode (cathode) 23 and the oxidation electrode (anode) 27, an oxidation reaction of water ($H_2O$) or hydroxide ions ($OH^-$) in the second electrolytic solution occurs electrochemically in the oxidation electrode. For example, when the second electrolytic solution has a hydrogen ion concentration of 7 or less ($pH \leq 7$), $H_2O$ is oxidized to produce $O_2$ and $H^+$ based on the following formula (14). Further, when the hydrogen ion concentration of the first electrolytic solution is larger than 7 ($pH > 7$), $OH^-$ is oxidized to produce $O_2$ and $H_2O$ based on the following formula (15).

$$3H_2O \rightarrow 3/2O_2 + 6H^+ + 6e^- \ldots \qquad (14)$$

$$60H^- \rightarrow 3/2O_2 + 3H_2O + 6e^- \ldots \qquad (15)$$

In the first accommodation part (first electrolysis tank) 22, separately from the electrochemical reaction, nitrogen ($N_2$) in the second electrolytic solution is reduced by the ammonia production catalyst and the reducing agent to produce ammonia ($NH_3$). When, for example, $SmI_2$ is used as the reducing agent, $N_2$ in the second electrolytic solution is reduced to produce ammonia ($NH_3$) based on the following formula (16).

$$N_2 + 6SmI_2 + 6H_2O \rightarrow 2NH_3 + 6SmI_2(OH) \ldots \qquad (16)$$

As represented by the above formula (16), $SmI_2$ as the reducing agent is oxidized by the production of $NH_3$, and loses the function as the reducing agent with the oxidation state left as it is. That is, when the reduction reaction of $N_2$ in the first electrolytic solution is caused in the first electrolysis tank not having a reduction electrode which electrochemically causes the reduction reaction, the reduction reaction of $N_2$ stops and the production of $NH_3$ finishes at an instant when the reducing agent in the amount put into the first electrolysis tank in the initial state is consumed by the reduction reaction of $N_2$. Regarding this point, in the electrolysis device of the arrangement, since the reduction electrode which causes the electrochemical reduction reaction is disposed in the first electrolysis tank, the reducing agent oxidized by the reduction

electrode, that is, $SmI_2(OH)$, can be reduced to be regenerated based on the following formula (17). Consequently, the reduction reaction of $N_2$ can continuously last. The amount of the reducing agent to be used is preferably set to 0.01 to 2 mol/L, and more preferably set to 0.1 to 1 mol/L relative to the first electrolytic solution in order to promote its reaction with the ammonia production catalyst.

$$6SmI_2(OH) + 6e^- \rightarrow 6SmI_2 + 6OH^- \quad ... \quad (17)$$

(Thirteenth arrangement)

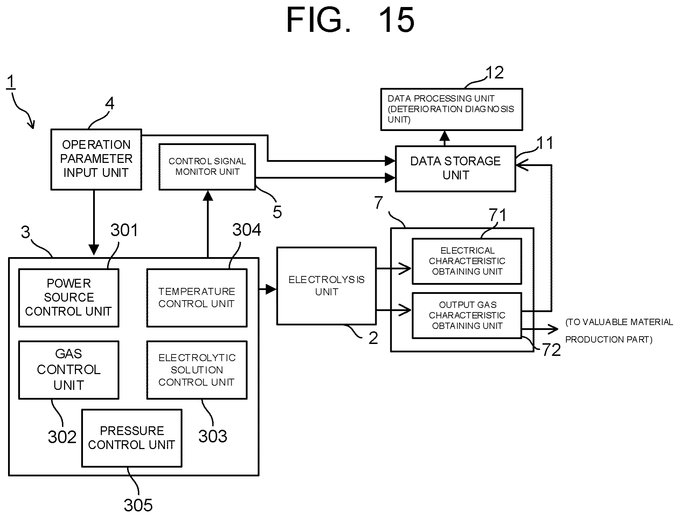

A state diagnosis method example using an electrolysis device 1 of a thirteenth arrangement will be described with reference to FIG. 15. FIG. 15 illustrates an example configuration of the electrolysis device 1 of the thirteenth arrangement. In the electrolysis device of the thirteenth arrangement, an operation control unit 3 has a power source control unit 301, a gas control unit 302, an electrolytic solution control unit 303, a temperature control unit 304, and a pressure control unit 305, and an output characteristic obtaining unit 7 has an electrical characteristic obtaining unit 71 and an output gas characteristic obtaining unit 72. Hereinafter, the parts different from those of the first arrangement are described, and the other parts can be appropriately quoted from the description of the first arrangement.

An electrolysis unit 2 has a carbon dioxide electrolysis cell including the configuration illustrated in FIG. 4. A reduction electrode 23 used for the carbon dioxide electrolysis cell is formed by applying gold nanoparticle-carrying carbon particles on carbon paper. An average particle size of the gold nanoparticles is 2 nm, and their carried amount is 10% by mass. An oxidation electrode 27 is an electrode in which $IrO_2$ nanoparticles are applied on a Ti nonwoven fabric. A diaphragm 29 is an anion exchange membrane. The reduction electrode 23 and the oxidation electrode 27 each cut to have an electrode area of 4 $cm^2$ are used. The carbon dioxide electrolysis cell is formed by stacking a first current collector plate 38, a first flow path 36, the reduction electrode 23, the diaphragm 29, the oxidation electrode 27, a second flow path 37, and a second current collector plate 39 in order from the left, and sandwiching them by using an insulating plate, a cooling water channel, and a support plate, which are not illustrated, as in the structure illustrated in FIG. 4.

By using the gas control unit 302 and the electrolytic solution control unit 303, $CO_2$ is introduced to the first flow path 36 of the carbon dioxide electrolysis cell at a flow rate of 80 sccm, and a 0.1 M $KHCO_3$ electrolytic solution is introduced to the second flow path 37 at a flow rate of 10 mL/min. Further, a temperature of the carbon dioxide electrolysis cell is controlled to 50°C using the temperature control unit 304 with the heater brought into close contact with the carbon dioxide electrolysis cell. The power source control unit 301 has a direct-current power source. The electrical characteristic obtaining unit 71 has a voltage measurement unit and a logger of a sequencer, and a resistance meter. The output gas characteristic obtaining unit 72 has a volumetric flow meter and a gas chromatograph. An operation parameter input unit 4 has an input unit of a personal computer or the sequencer, and inputs the previously-described carbon dioxide gas flow rate, cell temperature, and conditions of current which is passed through the carbon dioxide electrolysis cell to the operation control unit 3.

<First state diagnosis method example>

When a control signal from the power source control unit 301 is monitored using the electrolysis device 1 of the thirteenth arrangement, a constant current is passed through the carbon dioxide electrolysis cell to electrolyze carbon dioxide, a voltage signal V1 from the power source control unit 301 as a control signal at a normal operation time is monitored by the control signal monitor unit 5 as a control signal, and control signal data is stored in the data storage unit 11. Next, a long-term operation at the constant current is performed, a voltage signal V2 from the power source control unit 301 at this time is monitored by the control signal monitor unit as a control signal, and control signal data is stored in the data storage unit 11. A deterioration degree A is defined by the following formula (18), and a deterioration degree is calculated by the data processing unit.

$$A = [V2 - V1]/V1 \quad ... (18)$$

The case where the deterioration degree A exceeds ±20% is judged the occurrence of a cell deterioration to stop the operation. An instruction of the operation stop is transmitted to the operation control unit 3 from the data processing unit 12. Further, the case where V2 is provided with a reference value and exceeds the reference value may be judged the occurrence of the cell deterioration. In order to more quickly detect the cell deterioration, V2 is obtained preferably every minute, more preferably every ten seconds, and obtained further preferably every second to calculate the deterioration degree.

<Second state diagnosis method example>

When a control signal from the temperature control unit 304 is monitored using the electrolysis device 1 of the thirteenth arrangement, electric power supplied to a heater is set as a control signal of the heater in order to control a cell temperature to 50°C in the carbon dioxide electrolysis cell. A constant current is passed through the carbon dioxide electrolysis cell, a heater power P1 at a normal operation time is monitored by the control signal monitor unit 5, and control signal data is stored in the data storage unit 11. Next, a long-term operation at the constant current is performed, a heater power P2 at this time is monitored by the control signal monitor unit 5, and control signal data is stored in the data storage unit 11. A deterioration degree A is defined by the following formula (19), and a deterioration degree is calculated by the data processing unit.

$$A = [P2 - P1]/P \quad \dots (19)$$

The case where the deterioration degree A exceeds ±20% is judged the occurrence of a cell deterioration to stop the operation. An instruction of the operation stop is transmitted to the operation control unit 3 from the data processing unit 12. Further, the case where the heater power P2 is provided with a reference value and exceeds the reference value may be judged the occurrence of the cell deterioration. The heater power is affected by a temperature of an environment where the carbon dioxide electrolysis cell is placed, and thus it is preferable that a relationship between a heater power P and an ambient temperature T is set as P(T) = f(T) beforehand to formulate a function f of T, and the deterioration degree is calculated after correcting the ambient temperature for the heater power in the data processing unit 12.
As described above, even when the operation control unit 3 has the plurality of control units, monitoring a control signal from any of the control units and performing data processing using control signal data enable, for example, the diagnosis of the deterioration of the electrolysis cell.
Note that the configurations of the above-described arrangements are applicable in combination with each other, and parts thereof are also replaceable. While certain arrangements of the present invention have been described above, these arrangements have been presented by way of example only, and are not intended to limit the scope of the invention. Indeed the novel arrangements described herein may be embodied in a variety of other forms; furthermore, various omissions, substitutions, and changes in the form of the arrangements described herein may be made without departing from the spirit of the inventions. The accompanying claims and their equivalents are intended to cover such forms or modifications as would fall within the scope and spirit of the inventions.
The above arrangements can be summarized into the following clauses.

(Clause 1)

An electrolysis device including:

an electrolysis cell having a reduction electrode, an oxidation electrode, a first chamber facing on the reduction electrode, a second chamber facing on the oxidation electrode and configured to be supplied with an electrolytic solution containing water or water vapor, and a diaphragm provided between the first chamber and the second chamber;
an operation parameter input unit configured to input an operation parameter for operating the electrolysis cell;
an operation control unit configured to generate at least one control signal for operating the electrolysis cell according to the operation parameter;
a control signal monitor unit configured to monitor the at least one control signal from the operation control unit; and
a data processing unit configured to diagnose a state of the electrolysis cell by performing data processing using control signal data indicating a monitoring result of the at least one control signal.

(Clause 2)

The electrolysis device according to Clause 1,
wherein the state of the electrolysis cell includes a deterioration state of the electrolysis cell.

(Clause 3)

The electrolysis device according to Clause 1 or Clause 2, further including

a data storage unit configured to store parameter data indicating the operation parameter from the operation

parameter input unit and the control signal data,
wherein the data processing unit is configured to diagnose the state of the electrolysis cell by performing data processing using the control signal data from the data storage unit.

(Clause 4)

The electrolysis device according to any one of Clause 1 to Clause 3,
wherein the data processing unit is provided in a cloud, and remotely diagnoses the state of the electrolysis cell.

(Clause 5)

The electrolysis device according to any one of Clause 1 to Clause 4,

wherein the operation control unit includes at least one control unit selected from the group consisting of a power source control unit, a gas control unit, an electrolytic solution control unit, a temperature control unit, a pressure control unit, a humidification control unit, an electrolytic solution concentration control unit, and a trap control unit, and
wherein the data processing unit is configured to diagnose the state of the electrolysis cell by performing data processing using control signal data indicating a monitoring result of the at least one control signal from the at least one control unit.

(Clause 6)

The electrolysis device according to any one of Clause 1 to Clause 5,
wherein the data processing unit is configured to diagnose the state of the electrolysis cell by comparing normal data indicating the at least one control signal at a normal operation time of the electrolysis cell or abnormal data indicating the at least one control signal at an abnormal operation time of the electrolysis cell, and, operation data indicating the at least one control signal during a real operation.

(Clause 7)

The electrolysis device according to any one of Clause 1 to Clause 5,

wherein the control signal monitor unit monitors a change over time of the at least one control signal during a real operation of the electrolysis cell, and
wherein the data processing unit is configured to diagnose the state of the electrolysis cell by performing data processing using control signal data indicating a monitoring result of the change over time of the at least one control signal.

(Clause 8)

The electrolysis device according to any one of Clause 1 to Clause 5,
wherein the data processing unit is configured to find a deterioration degree of the control signal represented by [(control signal data during real operation) - (control signal data at normal operation time)]/(control signal data at normal operation time), sets a determination standard for the deterioration degree, and determines an operation stop of the electrolysis cell.

(Clause 9)

The electrolysis device according to any one of Clause 1 to Clause 8, further including

an output characteristic obtaining unit configured to obtain an output characteristic of the electrolysis cell,
wherein the data processing unit is configured to diagnose the state of the electrolysis cell by performing data processing using control signal data indicating a monitoring result of the at least one control signal and output characteristic data from the output characteristic obtaining unit.

(Clause 10)

The electrolysis device according to any one of Clause 1 to Clause 9,
wherein the reduction electrode is configured to reduce carbon dioxide to produce a carbon compound, or reduces

nitrogen to produce ammonia.

(Clause 11)

A state diagnosis method of diagnosing a state of an electrolysis cell,

the electrolysis cell having a reduction electrode, an oxidation electrode, a first chamber facing on the reduction electrode, a second chamber facing on the oxidation electrode and configured to be supplied with an electrolytic solution containing water or water vapor, and a diaphragm provided between the first chamber and the second chamber,
the state diagnosis method including:

generating at least one control signal for operating the electrolysis cell according to an operation parameter for operating the electrolysis cell;
monitoring the at least one control signal; and
diagnosing a state of the electrolysis cell by performing data processing using control signal data indicating a monitoring result of the at least one control signal.

(Clause 12)

The state diagnosis method according to clause 11,
wherein the state of the electrolysis cell includes a deterioration state of the electrolysis cell.

(Clause 13)

The state diagnosis method according to clause 11 or clause 12,

wherein parameter data indicating the operation parameter and the control signal data are stored in a data storage unit, and
wherein the state of the electrolysis cell is diagnosed by a data processing unit by performing data processing using the control signal data from the data storage unit.

(Clause 14)

The state diagnosis method according to any one of clause 11 to clause 13,
wherein the state of the electrolysis cell is remotely diagnosed by a data processing unit provided in a cloud.

(Clause 15)

The state diagnosis method according to any one of clause 11 to clause 14,
wherein the state of the electrolysis cell is diagnosed by performing data processing with a data processing unit using control signal data indicating a monitoring result of the at least one control signal from an operation control unit including at least one control unit selected from the group consisting of a power source control unit, a gas control unit, an electrolytic solution control unit, a temperature control unit, a pressure control unit, a humidification control unit, an electrolytic solution concentration control unit, and a trap control unit.

(Clause 16)

The state diagnosis method according to any one of clause 11 to clause 15,
wherein the state of the electrolysis cell is diagnosed by a data processing unit by comparing normal data indicating the at least one control signal at a normal operation time of the electrolysis cell or abnormal data indicating the at least one control signal at an abnormal operation time of the electrolysis cell, and, operation data indicating the at least one control signal during a real operation.

(Clause 17)

The state diagnosis method according to any one of clause 11 to clause 15,

wherein a change over time of the at least one control signal during a real operation of the electrolysis cell is monitored, and
wherein the state of the electrolysis cell is diagnosed by a data processing unit by performing data processing using control signal data indicating a monitoring result of the change over time of the at least one control signal.

(Clause 18)

The state diagnosis method according to any one of clause 11 to clause 15,
wherein a deterioration degree of the control signal represented by [(control signal data during real operation) - (control signal data at normal operation time)]/(control signal data at normal operation time) is found, a determination standard is set for the deterioration degree, and an operation stop of the electrolysis cell is determined.

(Clause 19)

The state diagnosis method according to any one of clause 11 to clause 18, further including

obtaining an output characteristic of the electrolysis cell,
wherein the state of the electrolysis cell is diagnosed by performing data processing using control signal data indicating a monitoring result of the at least one control signal and output characteristic data indicating the output characteristic of electrolysis cell.

(Clause 20)

The state diagnosis method according to any one of clause 11 to clause 19,
wherein the reduction electrode is configured to reduce carbon dioxide to produce a carbon compound, or reduces nitrogen to produce ammonia.

## Claims

**1.** An electrolysis device comprising:

an electrolysis cell having a reduction electrode, an oxidation electrode, a first chamber facing on the reduction electrode, a second chamber facing on the oxidation electrode and configured to be supplied with an electrolytic solution containing water or water vapor, and a diaphragm provided between the first chamber and the second chamber;
an operation parameter input unit configured to input an operation parameter for operating the electrolysis cell;
an operation control unit configured to generate at least one control signal for operating the electrolysis cell according to the operation parameter;
a control signal monitor unit configured to monitor the at least one control signal from the operation control unit; and
a data processing unit configured to diagnose a state of the electrolysis cell by performing data processing using control signal data indicating a monitoring result of the at least one control signal.

**2.** The electrolysis device according to claim 1,
wherein the state of the electrolysis cell includes a deterioration state of the electrolysis cell.

**3.** The electrolysis device according to claim 1 or claim 2, further comprising

a data storage unit configured to store a parameter data indicating the operation parameter from the operation parameter input unit and the control signal data,
wherein the data processing unit is configured to diagnose the state of the electrolysis cell by performing data processing using the control signal data from the data storage unit.

**4.** The electrolysis device according to any one of claim 1 to claim 3,
wherein the data processing unit is provided in a cloud, and remotely diagnoses the state of the electrolysis cell.

**5.** The electrolysis device according to any one of claim 1 to claim 4,

wherein the operation control unit includes at least one control unit selected from the group consisting of a power source control unit, a gas control unit, an electrolytic solution control unit, a temperature control unit, a pressure control unit, a humidification control unit, an electrolytic solution concentration control unit, and a trap control unit, and

wherein the data processing unit is configured to diagnose the state of the electrolysis cell by performing data processing using control signal data indicating a monitoring result of the at least one control signal from the at least one control unit.

**6.** The electrolysis device according to any one of claim 1 to claim 5,
wherein the data processing unit is configured to diagnose the state of the electrolysis cell by comparing normal data indicating the at least one control signal at a normal operation time of the electrolysis cell or abnormal data indicating the at least one control signal at an abnormal operation time of the electrolysis cell, and, operation data indicating the at least one control signal during a real operation.

**7.** The electrolysis device according to any one of claim 1 to claim 5,

wherein the control signal monitor unit is configured to monitor a change over time of the at least one control signal during a real operation of the electrolysis cell, and

wherein the data processing unit is configured to diagnose the state of the electrolysis cell by performing data processing using control signal data indicating a monitoring result of the change over time of the at least one control signal.

**8.** The electrolysis device according to any one of claim 1 to claim 5,
wherein the data processing unit is configured to find a deterioration degree of the control signal represented by [(control signal data during real operation) - (control signal data at normal operation time)]/(control signal data at normal operation time), sets a determination standard for the deterioration degree, and determines an operation stop of the electrolysis cell.

**9.** The electrolysis device according to any one of claim 1 to claim 8, further comprising

an output characteristic obtaining unit configured to obtain an output characteristic of the electrolysis cell,

wherein the data processing unit is configured to diagnose the state of the electrolysis cell by performing data processing using control signal data indicating a monitoring result of the at least one control signal and output characteristic data from the output characteristic obtaining unit.

**10.** The electrolysis device according to any one of claim 1 to claim 9,
wherein the reduction electrode is configured to reduce carbon dioxide to produce a carbon compound, or to reduce nitrogen to produce ammonia.

**11.** A state diagnosis method of diagnosing a state of an electrolysis cell,

the electrolysis cell having a reduction electrode, an oxidation electrode, a first chamber facing on the reduction electrode, a second chamber facing on the oxidation electrode and configured to be supplied with an electrolytic solution containing water or water vapor, and a diaphragm provided between the first chamber and the second chamber,

the state diagnosis method comprising:

generating at least one control signal for operating the electrolysis cell according to an operation parameter for operating the electrolysis cell;

monitoring the at least one control signal; and

diagnosing a state of the electrolysis cell by performing data processing using control signal data indicating a monitoring result of the at least one control signal.

**12.** The state diagnosis method according to claim 11,
wherein the state of the electrolysis cell includes a deterioration state of the electrolysis cell.

**13.** The state diagnosis method according to claim 11,

wherein parameter data indicating the operation parameter and the control signal data are stored in a data storage unit, and
wherein the state of the electrolysis cell is diagnosed by a data processing unit by performing data processing using the control signal data from the data storage unit.

**14.** The state diagnosis method according to any one of claim 11 to claim 13, wherein the state of the electrolysis cell is remotely diagnosed by a data processing unit provided in a cloud.

**15.** The state diagnosis method according to any one of claim 11 to claim 14, wherein the state of the electrolysis cell is diagnosed by performing data processing with a data processing unit using control signal data indicating a monitoring result of the at least one control signal from an operation control unit including at least one control unit selected from the group consisting of a power source control unit, a gas control unit, an electrolytic solution control unit, a temperature control unit, a pressure control unit, a humidification control unit, an electrolytic solution concentration control unit, and a trap control unit.

FIG. 1

1
12
DATA PROCESSING UNIT (DETERIORATION DIAGNOSIS UNIT)
4
OPERATION PARAMETER INPUT UNIT
CONTROL SIGNAL MONITOR UNIT
11
DATA STORAGE UNIT
5
3
OPERATION CONTROL UNIT
ELECTROLYSIS UNIT
(TO VALUABLE MATERIAL PRODUCTION PART)
2

FIG. 2

2A
33
29
35
24
28
23
27
22
26
30
21
25
31
32
34

FIG. 3

START
S1
CONTROL SIGNALS AT NORMAL OPERATION TIME AND AT ABNORMAL OPERATION TIME ARE OBTAINED, COMPILED INTO DATABASE, AND STORED IN DATA STORAGE UNI
S2
CONTROL SIGNAL DATA AT OPERATION TIME IS STORED IN DATA STORAGE UNIT
S3
BASED ON INFORMATION OF S1 AND S2, DETERIORATION DEGREE IS CALCULATED. REMAINING TIME UNTIL OPERATION STOP IS ESTIMATED FROM CHANGE IN DETERIORATION DEGREE
S4
WHETHER DETERIORATION DEGREE EXCEEDS OPERATION STOP STANDARD IS DETERMINED
NO
YES
S5
REAL OPERATION OF CELL AND STACK IS STOPPED
S6
MAINTENANCE OR REPLACEMENT OF ELECTROLYSIS CELL IS PERFORMED
S7
CONTROL SIGNAL DATA IN S2, DETERIORATION DEGREE IN S3, AND REMAINING TIME UNTIL OPERATION STOP STANDARD ARE DISPLAYED IN DISPLAY UNIT

FIG. 4

33
35
2B
29
23
27
36
37
38
39
31
34

FIG. 5

1
4
OPERATION PARAMETER INPUT UNIT
CONTROL SIGNAL MONITOR UNIT
12
DATA PROCESSING UNIT (DETERIORATION DIAGNOSIS UNIT)
11
DATA STORAGE UNIT
5
VOLTAGE OR CURRENT
VOLTAGE OR CURRENT
3
POWER SOURCE CONTROL UNIT
301
ELECTROLYSIS UNIT
2
(TO VALUABLE MATERIAL PRODUCTION PART)

FIG. 6

1
4
OPERATION PARAMETER INPUT UNIT
CONTROL SIGNAL MONITOR UNIT
12
DATA PROCESSING UNIT (DETERIORATION DIAGNOSIS UNIT)
11
DATA STORAGE UNIT
5
GAS FLOW RATE
GAS VALVE OPENING DEGREE
3
GAS CONTROL UNIT
302
ELECTROLYSIS UNIT
2
(TO VALUABLE MATERIAL PRODUCTION PART)

FIG. 7

1
4
OPERATION PARAMETER INPUT UNIT
CONTROL SIGNAL MONITOR UNIT
12
DATA PROCESSING UNIT (DETERIORATION DIAGNOSIS UNIT)
11
DATA STORAGE UNIT
5
ELECTROLYTIC SOLUTION FLOWRATE
PUMP CONTROL SIGNAL
3
ELECTROLYTIC SOLUTION CONTROL UNIT
303
ELECTROLYSIS UNIT
2
(TO VALUABLE MATERIAL PRODUCTION PART)

FIG. 8

1
4
OPERATION PARAMETER INPUT UNIT
CONTROL SIGNAL MONITOR UNIT
12
DATA PROCESSING UNIT (DETERIORATION DIAGNOSIS UNIT)
11
DATA STORAGE UNIT
5
TEMPERATURE
HEATER POWER
HEATER ON FREQUENCY
3
TEMPERATURE CONTROL UNIT
304
ELECTROLYSIS UNIT
2
(TO VALUABLE MATERIAL PRODUCTION PART)

FIG. 9

1
4
OPERATION PARAMETER INPUT UNIT
CONTROL SIGNAL MONITOR UNIT
12
DATA PROCESSING UNIT (DETERIORATION DIAGNOSIS UNIT)
11
DATA STORAGE UNIT
5
PRESSURE
VALVE OPENING DEGREE
3
PRESSURE CONTROL UNIT
ELECTROLYSIS UNIT
(TO VALUABLE MATERIAL PRODUCTION PART)
305
2

FIG. 10

1
4
OPERATION PARAMETER INPUT UNIT
CONTROL SIGNAL MONITOR UNIT
12
DATA PROCESSING UNIT (DETERIORATION DIAGNOSIS UNIT)
11
DATA STORAGE UNIT
5
DEW POINT
HEATER POWER
HEATER ON FREQUENCY
3
HUMIDIFICATION CONTROL UNIT
ELECTROLYSIS UNIT
(TO VALUABLE MATERIAL PRODUCTION PART)
306
2

# FIG. 11

1
4
OPERATION PARAMETER INPUT UNIT
CONTROL SIGNAL MONITOR UNIT
5
12
DATA PROCESSING UNIT (DETERIORATION DIAGNOSIS UNIT)
11
DATA STORAGE UNIT
CONCENTRATION
3
HIGH CONCENTRATION OR LOW CONCENTRATION ELECTROLYTIC SOLUTION INPUT AMOUNT
ELECTROLYTIC SOLUTION CONCENTRATION CONTROL UNIT
307
ELECTROLYSIS UNIT
2
(TO VALUABLE MATERIAL PRODUCTION PART)

# FIG. 12

1
4
OPERATION PARAMETER INPUT UNIT
CONTROL SIGNAL MONITOR UNIT
5
12
DATA PROCESSING UNIT (DETERIORATION DIAGNOSIS UNIT)
11
DATA STORAGE UNIT
LIQUID LEVEL
3
VALVE OPENING/CLOSING PUMP DRIVING
TRAP CONTROL UNIT
308
ELECTROLYSIS UNIT
2
(TO VALUABLE MATERIAL PRODUCTION UNIT)

FIG. 13

1
4
OPERATION PARAMETER INPUT UNIT
CONTROL SIGNAL MONITOR UNIT
5
12
DATA PROCESSING UNIT (DETERIORATION DIAGNOSIS UNIT)
DATA STORAGE UNIT
11
CONCENTRATION
3
HIGH-CONCENTRATION OR LOW-CONCENTRATION ELECTROLYTIC SOLUTION INPUT AMOUNT
ELECTROLYTIC SOLUTION CONCENTRATION CONTROL UNIT
307
ELECTROLYSIS UNIT
2
7
71
ELECTRICAL CHARACTERISTIC OBTAINING UNIT
OUTPUT GAS CHARACTERISTIC OBTAINING UNIT
72
(TO VALUABLE MATERIAL PRODUCTION PART)
TEMPERATURE CHARACTERISTIC OBTAINING UNIT
73
OUTPUT ELECTROLYTIC SOLUTION CHARACTERISTIC OBTAINING UNIT
74

FIG. 14

START

S1 OUTPUT CHARACTERISTIC DATA AT NORMAL OPERATION TIME AND AT ABNORMAL OPERATION TIME IS OBTAINED, COMPILED INTO DATABASE, AND STORED IN DATA STORAGE UNIT

S2 OUTPUT CHARACTERISTIC DATA AT OPERATION TIME IS STORED IN DATA STORAGE UNIT

S3 BASED ON INFORMATION OF S1 AND S2, DETERIORATION DEGREE IS CALCULATED. REMAINING TIME UNTIL OPERATION STOP IS ESTIMATED FROM CHANGE IN DETERIORATION DEGREE

S4 WHETHER DETERIORATION DEGREE EXCEEDS OPERATION STOP STANDARD IS DETERMINED

NO

YES

S5 REAL OPERATION OF CELL AND STACK IS STOPPED

S6 MAINTENANCE OR REPLACEMENT OF ELECTROLYSIS CELL IS PERFORMED

S7 CONTROL SIGNAL DATA IN S2, DETERIORATION DEGREE IN S3, AND REMAINING TIME UNTIL OPERATION STOP STANDARD ARE DISPLAYED IN DISPLAY UNIT

FIG. 15

1
4
OPERATION PARAMETER INPUT UNIT
CONTROL SIGNAL MONITOR UNIT
5
12
DATA PROCESSING UNIT (DETERIORATION DIAGNOSIS UNIT)
DATA STORAGE UNIT
11
3
301
304
POWER SOURCE CONTROL UNIT
TEMPERATURE CONTROL UNIT
GAS CONTROL UNIT
ELECTROLYTIC SOLUTION CONTROL UNIT
302
PRESSURE CONTROL UNIT
303
305
ELECTROLYSIS UNIT
2
7
71
ELECTRICAL CHARACTERISTIC OBTAINING UNIT
OUTPUT GAS CHARACTERISTIC OBTAINING UNIT
72
(TO VALUABLE MATERIAL PRODUCTION PART)

Europäisches
Patentamt
European
Patent Office
Office européen
des brevets

# EUROPEAN SEARCH REPORT

Application Number
EP 26 15 7147

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | EP 2 948 576 B1 (HALDOR TOPSOE AS [DK]) 18 October 2017 (2017-10-18)<br>* paragraph [0002]; claim 1; figures *<br>* paragraph [0002] * | 1-15<br>4,9,14 | INV.<br>C25B1/04<br>C25B15/02<br>C25B15/025 |
| X<br>Y | WO 2011/130819 A1 (RECH 2000 INC [CA]; TREMBLAY GILLES J [CA] ET AL.) 27 October 2011 (2011-10-27)<br>* paragraphs [0050] - [0052]; figure 4 * | 1-15<br>4,9,14 | |
| Y | CN 118 207 587 B (YAOJING NEW ENERGY JILIN CO LTD) 19 July 2024 (2024-07-19)<br>* figure 1 * | 4,14 | |
| A | US 2018/135192 A1 (ARAI NOBUTOSHI [JP] ET AL) 17 May 2018 (2018-05-17)<br>* figure 4 * | 1-15 | |
| | | | TECHNICAL FIELDS SEARCHED (IPC) |
| | | | C25B |

The present search report has been drawn up for all claims

| Place of search | Date of completion of the search | Examiner |
|---|---|---|
| Munich | 29 June 2026 | Ulivieri, Enrico |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

2

## ANNEX TO THE EUROPEAN SEARCH REPORT ON EUROPEAN PATENT APPLICATION NO.

EP 26 15 7147

This annex lists the patent family members relating to the patent documents cited in the above-mentioned European search report. The members are as contained in the European Patent Office EDP file on The European Patent Office is in no way liable for these particulars which are merely given for the purpose of information.

29-06-2026

| Patent document cited in search report | Publication date | Patent family member(s) | Publication date |
|---|---|---|---|
| EP 2948576 B1 | 18-10-2017 | CN 105102684 A | 25-11-2015 |
| | | DK 2948576 T3 | 27-11-2017 |
| | | EP 2948576 A1 | 02-12-2015 |
| | | ES 2648174 T3 | 28-12-2017 |
| | | RU 2015135614 A | 03-03-2017 |
| | | US 2015329980 A1 | 19-11-2015 |
| | | WO 2014114348 A1 | 31-07-2014 |
| WO 2011130819 A1 | 27-10-2011 | CA 2794737 A1 | 27-10-2011 |
| | | JP 5770829 B2 | 26-08-2015 |
| | | JP 2013525603 A | 20-06-2013 |
| | | WO 2011130819 A1 | 27-10-2011 |
| CN 118207587 B | 19-07-2024 | NONE | |
| US 2018135192 A1 | 17-05-2018 | CN 107849712 A | 27-03-2018 |
| | | JP 5980373 B1 | 31-08-2016 |
| | | JP 2016204731 A | 08-12-2016 |
| | | US 2018135192 A1 | 17-05-2018 |
| | | WO 2016174782 A1 | 03-11-2016 |

EPO FORM P0459

For more details about this annex : see Official Journal of the European Patent Office, No. 12/82